## Europäisches Patentamt

## European Patent Office

## Office européen des brevets

(19)

(11) **EP 1 178 915 B1**

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(51) Int Cl.7: **B62D 25/12**, B60R 21/34, E05D 7/12

(21) Anmeldenummer: **00945525.4**

(86) Internationale Anmeldenummer:
**PCT/DE00/01517**

(22) Anmeldetag: **13.05.2000**

(87) Internationale Veröffentlichungsnummer:
**WO 00/069702 (23.11.2000 Gazette 2000/47)**

(54) **RETTUNGSSYSTEM EINES ZUGES ODER FAHRZEUGES**

RESCUE SYSTEM OF A TRAIN OR VEHICLE

SYSTEME DE SAUVETAGE POUR TRAIN OU VEHICULE

(84) Benannte Vertragsstaaten:
**AT CH DE FR GB LI**

(30) Priorität: **19.05.1999 DE 19922985**

(43) Veröffentlichungstag der Anmeldung:
**13.02.2002 Patentblatt 2002/07**

(73) Patentinhaber: **Go, Giok Djien, Dr.-Ing.
65510 Idstein (DE)**

(72) Erfinder: **Go, Giok Djien, Dr.-Ing.
65510 Idstein (DE)**

(56) Entgegenhaltungen:
**DE-A- 19 743 965          DE-U- 29 713 031**

EP 1 178 915 B1

**Beschreibung**

Die Erfindung betrifft ein Rettungssystem

- zur *umgehenden* Rettung der Insassen aus einem Transportmittel (Zug, Bahn, Kraftfahrzeug, Schiff Boot oder Flugzeug) durch *Türentriegelung* nach Beendigung eines Unfallvorganges und/oder bei einem Brand *und*
- *zur Anleitung und Absicherung der Rettungsarbeit.*

Gemäß der gattungsgemäßen DE 197 43 965 A1 besteht das Türscharnier aus zwei Scharnierbändern, welche an der Fahrzeugkarosserie und Fahrzeugtür mittels Nieten mit Sollbruchstellen befestigt sind. Bei Überschreitung des Grenzwertes brechen die Nieten. Leider weist dieses Merkmal folgende Nachteile auf:

- Infolge der Überschreitung des Grenzwertes während eines Unfalles oder Crashtests werden die Türen entriegelt und Insassen oder Dummies durch die Restenergie deformiert. Wenn sich das Unfallfahrzeug ohne Türen überschlägt, werden die verletzten Insassen und die Gegenstände herausgeschleudert. Ferner können die freifliegenden Türen Unbeteiligte totschlagen.
- Da die Fahrzeugtür die Hauptaufgabe zur Aufnahme und zum Übertragen der Aufprallenergie an die Fahrgastzelle nicht erfüllen kann, kollabiert die Fahrgastzelle während des Unfalles oder Crashtests. Für den Straßenverkehr wird das Fahrzeug nicht zugelassen.

Bei der Türentriegelungsvorrichtung gemäß DE 89 14 921 U1 besteht der Scharnierbolzen aus einem Kopf, einem Kolben und einer den Kopf mit dem Kolben verbindenden Stange. Der Kopf ist in Steckverbindung mit einem Scharnierband. In dem Hohlraum der unteren Büchse des anderen Scharnierbandes befindet sich der Kolben. Daraus wird ein Raum gebildet, um Gaspellets zu lagern.

Wenn die Tür beim Unfall festgeklemmt ist, dann werden die Gaspellets nach dem Unfall zur Explosion gebracht. Durch Freisetzen der Energie werden sowohl die Türscharniere als auch die Tür zerstört. Da die Türteile, Eisen- und Glassplitter freifliegen, werden die Insassen und Unbeteiligten gefährdet.

Bei der Twrentriegelungsvonrichtung gemäß US *5,011,215* A sind beide Türschamiere einer Nottür des Busses an einer Hilfsplatte befestigt, die in eine Öffnung der Karosserie eingeschoben wird und in deren Spalt ein mit einem Griff verbundener Keil eingesteckt wird. *Dadurch wird die Hilfsplatte an der Öffnung der Karosserie gesichert.*

Wenn die Nottür beim Unfall festgeklemmt ist, dann sollte die Verbindung des Keils mit dem Spalt durch die Betätigung des Griffes außerhalb des Busses aufgehoben werden. Durch Aufprallenergie verkeilt sich die Hilfsplatte in die Öffnung der Karosserie. Somit bleibt die Nottür in der Karosserie festgeklemmt.

Außerdem erleichtert das Öffnen der Nottür durch die Bedienung des Griffes von außen den Dieben, Gegenstände zu stehlen, oder den Kindern, einen Streich zu spielen.

Ferner verteuert sich die Konstruktion der Fahrzeugtüren wegen der Anpassungs-, Abdichtungsarbeit des Paares Hilfsplatte / Öffnung, Erhöhung der durch die Öffnung geschwächten Steifigkeit und des Vermeidens von Klappergeräuschen.

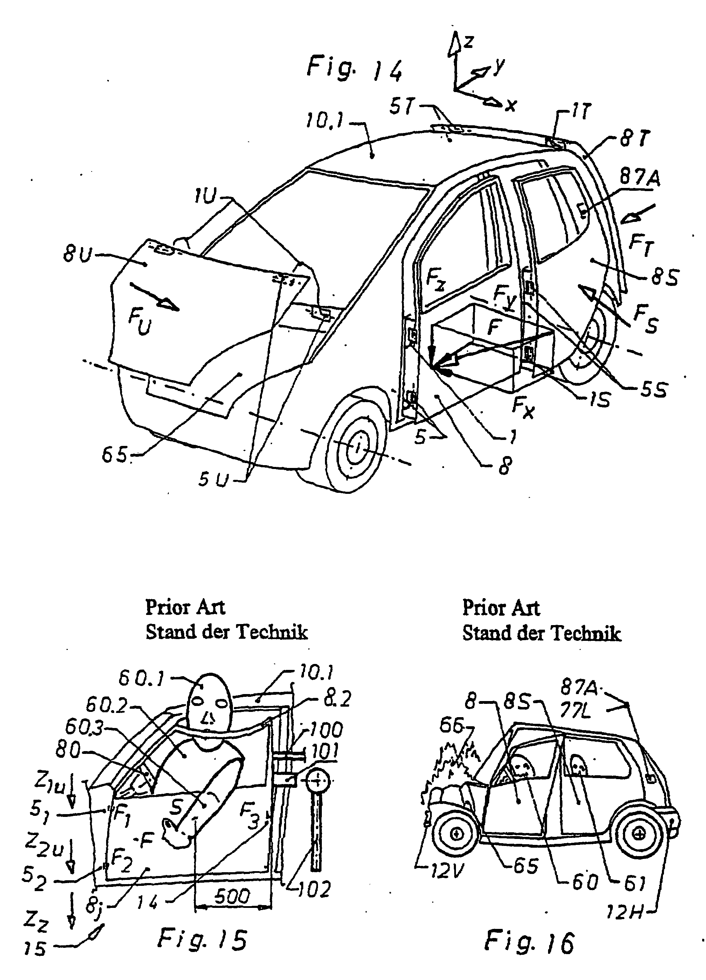

Aus dem DE 297 13 031 U1 geht eine komplizierte, klobige Konstruktion eines Türscharniers, deren Scharnierbänder trennbar sein sollten, hervor. Ein Scharnierband ist in Steckverbindung mit einem Scharnierbolzen, dessen konusförmiger Endabschnitt mit dem anderen Scharnierband formschlüssig und mittels Schraube kraftschlüssig verbunden ist. Wegen dieser Befestigungsart ist Zweifel erlaubt, ob das Innengewinde im Endabschnitt herstellbar ist und die kleinen Schrauben Belastungen in Betrieb und hohen Aufprallkräften standhalten. Falls diese Schrauben standhalten, sitzen sie beim Unfall derartig fest, trotz Einsatz eines Werkzeuges **(Fig.** 15). Die Tür bleibt festgeklemmt.

Die klobige Form nimmt so viel Platz, daß die teuren Türscharniere im Auto nicht eingebaut werden können.

Zwecks Vereinfachung der Formulierung werden *"folgende Begriffe"* für die exakten Bezeichnungen eingeführt:

*"Fahrzeugtür"* für Transportmitteltür **8, 8S,** Hecktür **8T,** nichtgezeichnete Drehtür **8V,** Motorhaube **8U,** Kofferraumdeckel **8Y,** nichtgezeichnete Ladedoppeltür **8W,** nichtgezeichnete Schiebetür **8X,** Nottür oder jedes mit Fahrzeugkarosserie durch mindestens zwei Türscharniere drehbar und/oder verschiebbar verbundene, nichtgezeichnete Fahrzeugteil.

*"Unfall"* für Front-, Seiten-, Heckkollision, Aufprall gegen ein Hindernis und/oder Überschlagen des Transportmittels.

*"festgeklemmte Fahrzeugtür"* für Fahrzeugtür, die in der Fahrzeugkarosserie beim Unfall festgeklemmt ist **(Fig.** 15), läßt sich im Gegensatz zu einer an der Fahrzeugkarosserie klemmenden Fahrzeugtür trotz großem Zeit- und Kraftaufwand nicht öffnen.

*"Karosserie"* fiir Transportmittelkarosserie, die die Fahrgastzelle, den Fahrzeugboden, Vorbau- und Hinterbereich umfaßt.

*"Hilfspersonen"* für Hilfskräfte wie Polizisten, Ärzte, Sanitäter, Feuerwehrleute usw.

*"Zugglied"* für Zugelement des Turscharniers wie Seil *oder* Zugstange.

*"Bolzenentriegelung"* für Herausziehen des Scharnierbolzens aus dem Loch des Türscharniers.

*"Scharnierentriegelung"* für Aufheben der Verbindung der Türscharniere mit der festgeklemmten Fahrzeugtür durch Bolzenentriegelung und/oder Bruch der Türscharniere.

*"Spreizelement"* für Spreizelement, durch dessen translatorische oder rotatorische Bewegung das Scharnierband zwecks Scharnierentriegelung aufgeweitet oder - gesprengt wird.

*"Türentriegelung"* für Auflösen der festen Verbindung der Fahrzeugtür mit der Karosserie durch Scharnierentriegelung.

*"Türentriegelung von außen"* für Türentriegelung durch Hilfspersonen außerhalb des Unfallfahrzeuges.

*"Türentriegelung von innen"* für Türentriegelung durch Insassen aus eigener Kraft.

*"Türentriegelung"* für Türentriegelung nach Beendigung des Unfallvorganges, um das Herausschleudern der Insassen und Gegenstände aus dem Unfallfahrzeug wegen der Türentriegelung während des Überschlagens zu vermeiden und die Hauptaufgabe der Fahrzeugtür zur Aufnahme und zum Übertragen der Aufprallenergie an die Fahrgastzelle während des Unfalles oder Crashtests beizubehalten.

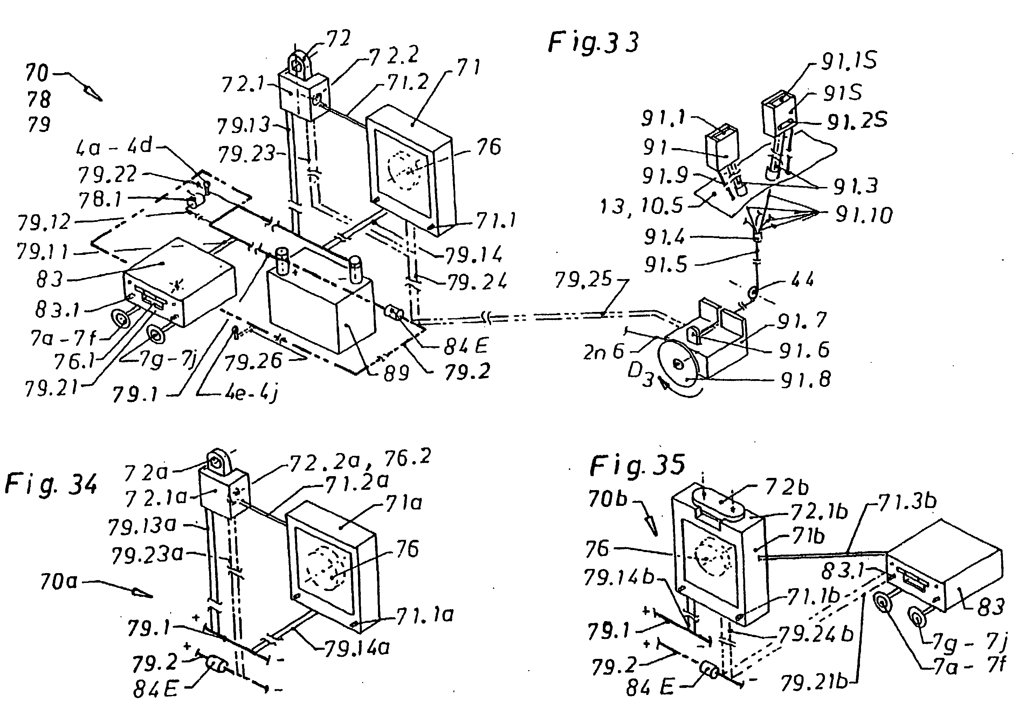

*"Entriegelungsgriff"* für Handbremshebel, Lösetaste des Gurtschlosses, Drucktaste des Gurtschlosses, Griff **(Fig.** 33 bis 37).

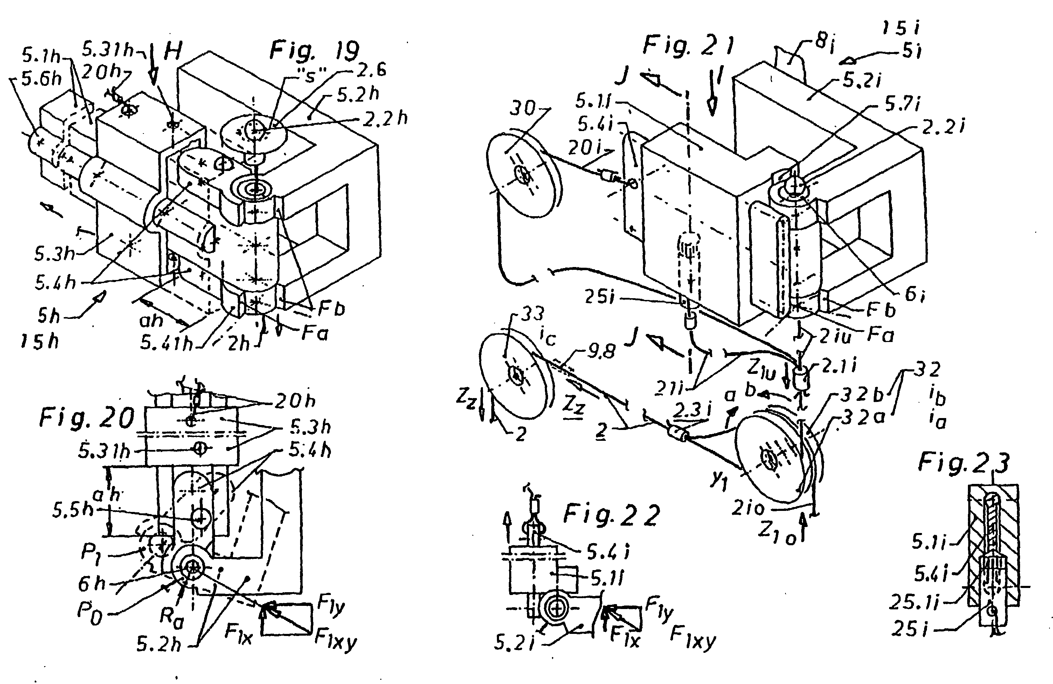

*"Stützarm"* für Stützarm des Scharnierbandes zur Führung beider Augen des anderen Scharnierbandes **(Fig.** 19 bis 24).

*"Rettung der Insassen aus Unfallfahrzeug"* für Rettung der Insassen aus einem UnfaUfahrzeug oder -transportmittel.

Zwischen dem oberen Türrahmen und dem Dach war der Kopf des Fahrers festgeklemmt **(Fig.** 15). Obwohl zwei Hilfspersonen zwei Keile in den Türspalt mittels eines Hammers einschlugen und später zwei Brechstangen unter großem Kraftaufwand einsetzten, blieb die Fahrertür in der Fahrgastzelle festgeklemmt. Unter der Annahme, daß die Gesarotkraft zweier Feuerwehrmänner 5000 N, die Türbreite 500 mm und Wirklänge der Brechstange 600 mm ist, errechnet sich "$F_x$" gleich 6000 N. Für das Festklemmen der Fahrertür und des Kopfes sind "$F_x$" > 6000 N, "$F_y$" und "$F_z$" in unbestimmter Höhe (**Fig.** 14) verantwortlich. Als mittels einer Rettungsschere die Fahrertür endlich geöffnet werden konnte, war der Fahrer schon tot. Für eine erfolgreiche Rettungsarbeit ist die Rettungszeit von entscheidender Bedeutung.

Im brennenden, infolge des Überschlagens auf dem Dach liegengebliebenen Fahrzeug wurde der Fahrer bis zur Unkenntlichkeit verbrannt, weil er die festgeklemmte Fahrertür nicht aufmachen konnte.

Aus einer Rettungsschere, hydraulischen Pumpe, einem Motor, Rettungsspreizer und 25 m langen, schweren Schlauch setzt sich das schwere Rettungsgerät zusammen. Zum Unfallort wird der Feuerwehrwagen samt Rettungsgerät gefahren. Ist die Unfallstelle nicht befahrbar, dann wird das Gerät aus dem Feuerwehrwagen herausgenommen und von vier Männern getragen. Durch die Verzögerung der Rettungsarbeit nimmt die Verletzungsschwere zu.

Mit Kostenaufwand ist die Bereitstellung der Feuerwehrleute, Feuerwehrwagen und Rettungsgeräte verbunden und mit Zeitaufwand die Benachrichtigung und Anfahrt.

Die Verletzungszustände der Insassen verschlimmerten sich als Folge der Verzögerung der Rettungsarbeit am ICE-Unfallzug in Eschede, weil

- die für das Material aus Eisen vorgesehenen Trennscheiben für das Material aus Aluminium weniger geeignet waren und

- die festgeklemmten, äußerst steifen Alu-Türen der Waggon unter hohem Zeitaufwand geöffnet werden konnten.

Ein Luxuswagen durchbrach eine Mittelleitplanke beim Aufprall und überschlug sich an der Gegenfahrbahn. Er blieb auf der Gegenfahrbahn quer stehen und auf dem Dach liegen, In Dunkelheit wurde dieser Luxuswagen durch einen LKW gerammt. Beide Fahrzeuge gingen in Flammen auf.

Falls sich die Wamblinkanlage beim Unfall automatisch einschalten läßt, ist Kollision der Fahrzeuge, Brand, Verletzung bei der Arbeit zur Türentriegelung, während der Rettungsarbeit und/oder beim Aussteigen aus den Unfallfahrzeugen mit großer Wahrscheinlichkeit vermeidbar.

Der Erfindung liegt mithin die Aufgabe zugrunde, ein einfaches, sicheres und preiswertes Rettungssystem zur umgehenden Rettung der Insassen aus dem Transportmittel durch Türentriegelung nach Beendigung des Unfallvorganges und/oder beim Brand und zur *Anleitung und* Absicherung der Rettungsarbeit zu schaffen. Die erfindungsgemäße Lösung dieser Aufgabe besteht in den Merkmalen des Patentanspruches 1. Die Unteransprüche beschreiben vorteilhafte Ausbildungen der Erfindung.

Jene Lösung und Ausbildungen setzen sich aus folgenden Lösungsansätzen zusammen:

A1 Bolzenentriegelung

Das aus drei Augen bestehende Türscharnier des Opel Astra A hat eine Gesamtlänge $L_G = L_1 + L_2 + L_3 = 50$ mm und Entriegelungsweg $W_e = 37.5$ mm. ist. Da das Türscharnier des Volvo 850 aus zwei Augen mit "$L_1$" und "$L_2$" besteht, ist die Gesamtlänge dementsprechend kürzer.
Für alle PKW und LKW beträgt der Entriegelungsweg

$$w_c = 20 \text{ bis } 60 \text{ mm.}$$

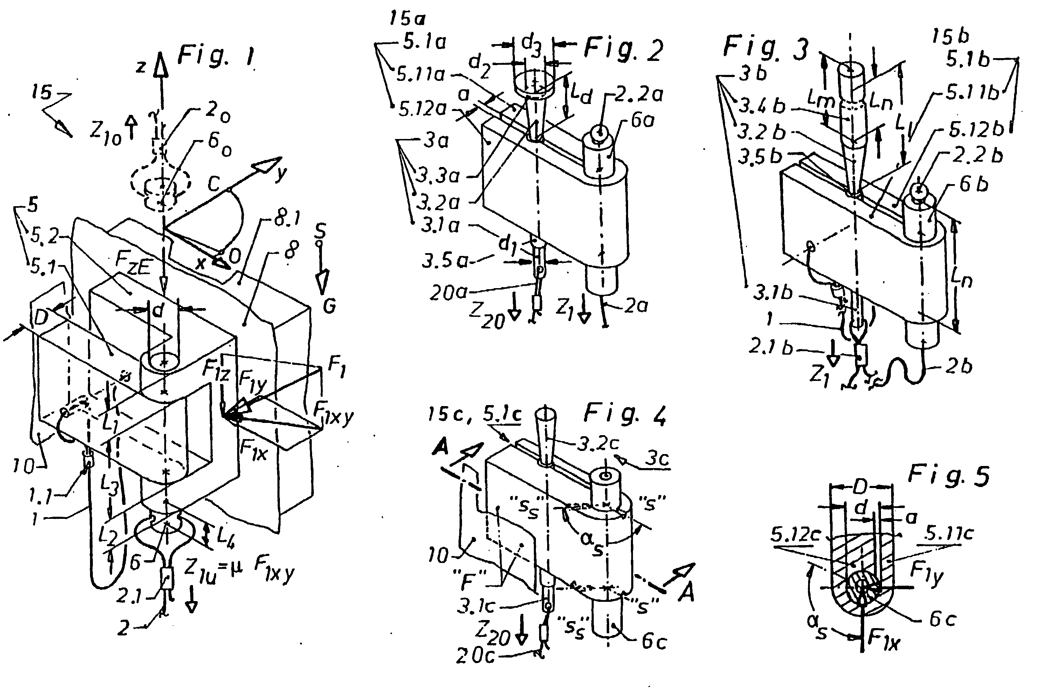

Bei Verwendung einer Umlaufrolle **30-44** mit Durchmesser beispielsweise von 100 mm oder 200 mm (**Fig.** 1, 21, 36) errechnet sich
der Drehwinkel oe zwischen 23° bis 68.8° oder zwischen 11.5° bis 34.4°.
Als Umlaufrolle ist die Seilrolle beispielsweise für Krane und Winden ebenso geeignet.

Einsetzbar sind die platzsparenden Umlaufrollen für alle Fahrzeugtüren **8, 8S-8Y,** die Karosserie **10** und den Fahrzeugboden **13**. Die Last "$F_x$" von 6000 N, die Lasten "$F_z$" und "$F_y$" in unbestimmter Höhe werden am Umfang der in der Fahrgastzelle festgeklemmten Fahrertür verteilt. Neuerdings ist das Türscharnier mit Fettschmierung zur Reduzierung der Reibung versehen. Somit dürfte die Reibungszahl "$\mu$" um 0.1 betragen. Unter der Annahme, daß drei aus einem Paar Türscharnieren **5, 5$_1$, 5$_2$** und dem Türschloß **14 (Fig:** 1, 15) gebildeten Hauptstützen durch "$F_x$", "$F_y$" und "$F_z$" gleichmäßig belastet werden, errechnet sich die Zugkraft jedes Türscharniers

$$\text{Gl.(1): } \quad Z_{1u} = Z_{2u} = Z_3 = (0.1 \, F_y + F_z)/3 + F_{zE} + 200 \text{ N}$$

$$Z_{1u} = Z_{2u} \qquad = 0.1 \, F_{1y} + F_{zE} + 200 \text{ N}$$

Da die Scharnierbänder **5.1, 5.2** in z-Richtung gegenseitig abstützen, hat die Last "$F_{12}$" keinen Einfluß auf "$Z_{1u}$" und "$Z_{2u}$" bei Bolzenentriegelung. Bei der Montage wird der Scbarnierooizen in die Löcher beider Scharnierbänder eingepreßt. Somit muß eine Zugkraft "$F_{zE}$" für das Herausziehen aufgewendet werden. Die Addition beider Zugkräfte ergibt die Zugkraft "$Z_z$" der Türentriegelungsvorrichtung **15** zur Entriegelung der Fahrzeugtür **8$_j$**

$$\text{Gl. (2): } \quad Z_z = Z_{1u} + Z_{2u} = 0.2 \, F_{1y} + 2 \, F_{zE} + 400 \text{ N,}$$

welche geringer als "F" (**Fig.** 14) ist.

A2 Minimierung der Zugkräfte

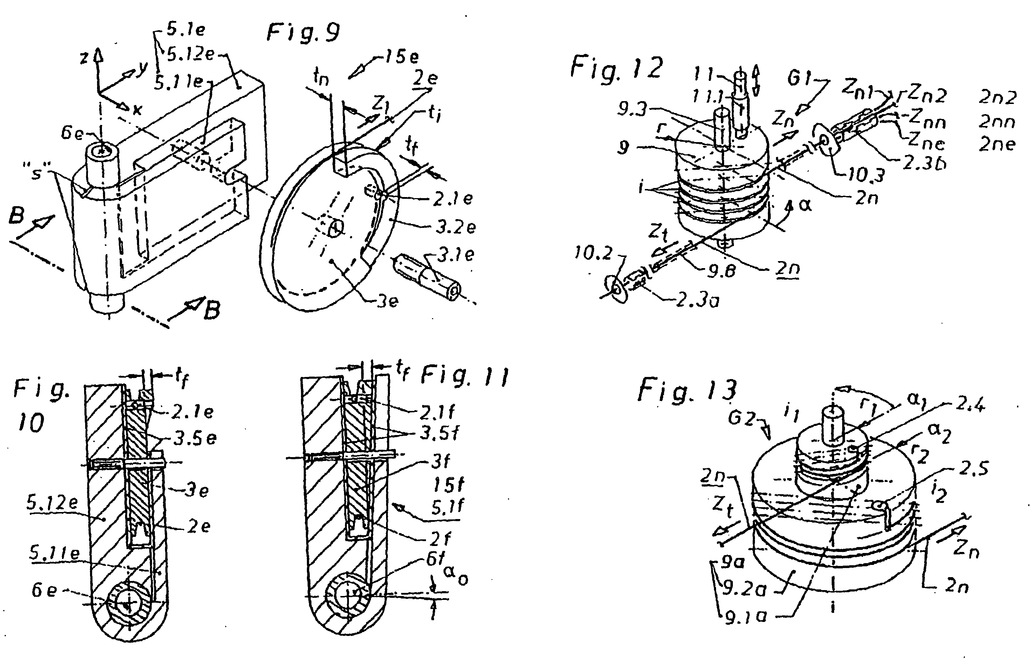

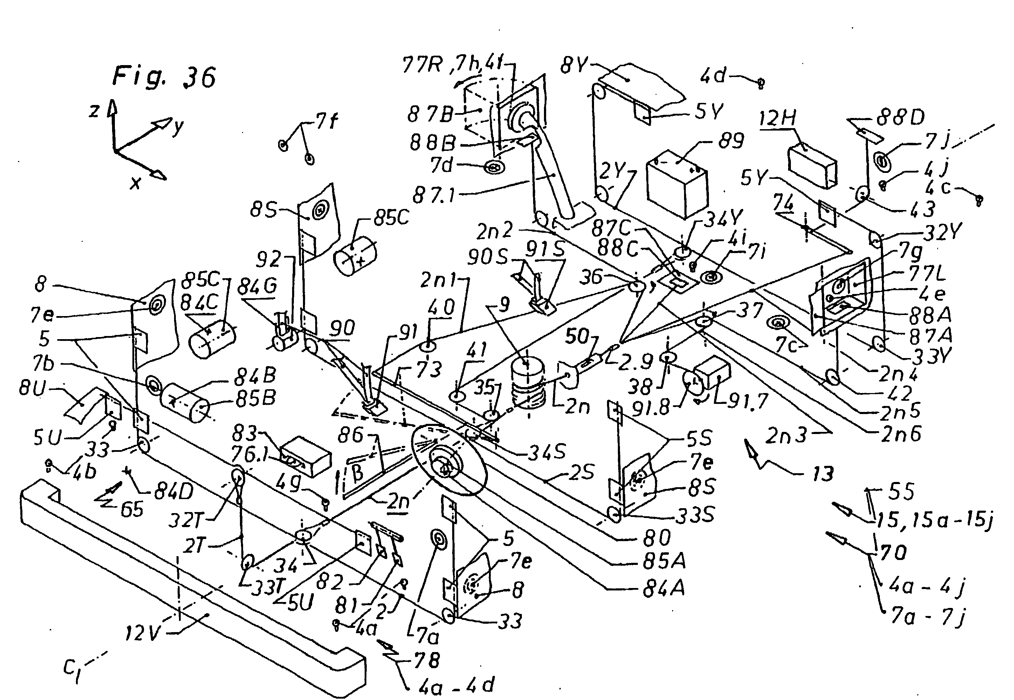

Sind die Seile **2, 2S, 2U, 2Y** der festgeklemmten Fahrzeugtüren mit Sollbruchstellen versehen, dann tritt Bruch bei zunehmender Zugkraft ein. Das Merkmal ermöglicht einem Verletzten, sich durch das Entriegeln der beifahrerseitig hintereinanderliegenden, wenig verformten Fahrzeugtüren **8, 8S** und der anderen **8U, 8Y (Fig.** 36) selbst zu retten, selbst wenn das Getriebe zur Reduzierung der Zugkraft nicht zum Einsatz kommt. Allerdings hat dieses Merkmal den Nachteil, daß sowohl die ärztliche Versorgung als auch die Rettungsarbeit beeinträchtigt wird, da die Hilfspersonen keinen freien Zugang zu den Verletzten finden. Um alle Fahrzeugtüren **8, 8S** zu entriegeln, ist ein Getriebe erforderlich. Ein aus Zahnrädern bestehendes Getriebe ist für einen einmaligen Rettungseinsatz zu teuer. Völlig ausreichend ist die Verwendung eines Getriebes **G1**, dessen Umlaufrollen folgende Parameter wie Reibungszahl "$\mu$", Windungszahl "i" und/oder Übersetzungsverhältnis "$r_2/r_1$" (**Fig.** 12) aufweist. Gemäß der Zugkraft lautet die Gleichung der Seilreibung.

$$\text{Gl. (3): } \quad Z_n = Z_i/e^{\mu\alpha} = Z_t/e^{2p\mu 1},$$

wobei p = 3.141 ist.
Unter der Annahme, daß $\mu = 0.15$ für Stahl auf Stahl, i = 3 und $Z_t = 1000$ N + $Z_G$ für die festgeklemmte Fahrertür **8**, die verformte Hintertür **8**, die deformierte Motorhaube **8U** und den Rest der nicht verformten Türen ist, läßt sich folgende Gleichung aufstellen:

Gl. (4):   $Z_n$ = 59.2 N + 0.059 $Z_G$.

Ist das Seil **2n**, **2n** des Getriebes **G1** mit einem Schlauch **9.8** überzogen, dann beträgt die Reibungszahl "μ" zwischen 0.4 bis 0.5 für Riemen auf GG (Grauguß). Bei Wahl μ = 0.3 beträgt

$$Z_n = 3.5 N + 0.0035 Z_G.$$

Bei Verwendung eines anderen Getriebes **G2** mit Übersetzungsverhältnis "$r_2/r_1$" (**Fig.** 13) gilt folgende Gleichung fiir abnehmende Zugkraft

$$Gl. (5):   Z_n = (r_1 Z_t)/(r_2 e^{2p\mu(i_1 + 1_2)}).$$

Bei $r_2/r_1$ = 2.1, $i_1$ = 2 und $i_2$ = 3 verringert sich "Z" auf

$$4.3N + 0.0043 Z_G \quad bei \mu = 0.15,$$

$$0.89 N + 0.00089 Z_G \quad bei \mu = 0.2$$

und

$$0.038 N + 0.00004 Z_G \quad bei \mu = 0.3.$$

Ist "$Z_G$" in Größenordnung der "$Z_t$", dann bringt ein Verletzter die äußerst geringe Zugkraft leicht auf, um sich und die anderen verletzten Insassen aus dem brennenden Fahrzeug trotz vier schweren Fahrzeugtüren zu retten.
Ist "$Z_G$" bedingt durch Festklemmen beispielsweise fahrerseitig hintereinanderliegeuder Fahrzeugtüren **8, 8S** sehr groß, muß ein Verletzter größere Kraft aufwenden.

A3 Zugkräfte in entgegengesetzter Richtung

Sind die beiden Zugkräfle "$Z_{lu}$" und "$Z_{lo}$" für die Bolzenentriegelung des *oberen und unteren* Türschanüers **5i** der Fahrzeugtür **8$_i$** (**Fig. 21**) verantwortlich, dann gilt die Gleichung der Seilreibung fiir die Zugkraft "$Z_z$" der Türentriegelungsvorrichtung **15i** zur Türentriegelung

$$Gl. (6):   Z_z = Z_z/e^{2p\mu i}{}_c$$

$$= (Z_{lu} + Z_{lo})/e^{2p\mu(i_a + 1}c),$$

die entscheidend geringer als "$Z_z$" nach **Gl.** (2) ist, wobei "$i_a$", "$i_b$" und "$i_c$" die Windungszahl der Umlaufrolle **32a, 32b** und **33** ist und $i_a = i_b$ ist. Die Windungszahl ist beliebig. Die Doppelumlaufrolle **32** setzt sich aus zwei Umlaufrollen **32a** und **32b** in entgegengesetzter Drehrichtung "a" und "b" zusammen.
Wegen größerer Reibungszahl durch Überziehen des Seiles mit dem Schlauch **9.8** verringert sich die Zugkraft "$Z_z$".

A4 Verkürzung des Weges durch Entriegelung zweier Bolzenteile

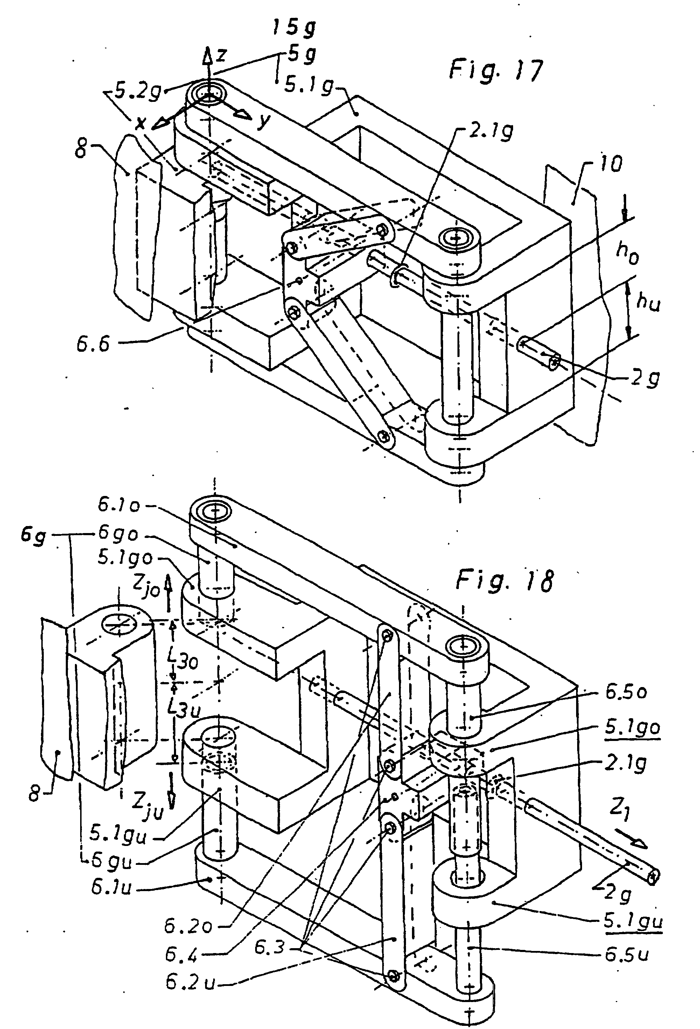

Zwei Kopplungselemente **6.1o, 6.1u** verbinden zwei Bolzenteile **6go, 6gu** des Türscharniers **5g** mit einem Paar ineinander verschiebbaren Führungsrohren **6.5o, 6.5u (Fig.** 17, 18) kraftschlüssig. Diese beiden Bolzenteile übernehmen die Aufgabe eines Scharnierbolzens **6g** für formschlüssige Verbindung des an der Karosserie **10** befestigten Scharnierbandes **5.1g** mit dem an der Tür **8** befestigten Scharnierband **5.2g**. Durch Ziehen der Zugstange **2g** drückt das Paar obere Lenker **6.2o** das Kopplungselement **6.1o** nach oben und das Paar untere Lenker **6.2u** das Kopplungselement **6.1u** nach unten. Dadurch wird das Scharuierband **5.2g** von beiden Bolzenteilen getrennt. Allerdings bleibt die formschlüssige Verbindung der beiden Führungsrohre miteinander weiterhin erhalten. Vorteil dieses Merkmales ist, daß

- die Verschiebung zweier Bolzenteile um "$L_1$" oder "$L_2$" kürzer ist;
- die in entgegengesetzter Richtung operierenden Zugkräfte "$Z_{ju}$" und "$Z_{jo}$" gegeneinander aufheben;
- das Auflösen der Verbindung zweier Bolzenteile mit dem Scharnierband **5.2g** mit/ohne Verzug bestimmt werden kann. Sind die oberen Teile **6.1o, 6go, 6.5o** und die unteren Teile **6.1u, 6gu, 6.5u** identisch, dann erfolgt das Auflösen ohne Verzug;
- die ineinander verschiebbaren Führungsrohre die Führungsaufgabe während der Bolzenentriegelung übernehmen und
- sich die Chance für eine erfolgreiche Rettungsarbeit durch Verkürzung der Zeit verbessert, weil der Entriegelungs-weg "$w_e$" bei Opel Astra von $L_e$ = 37.5 mm auf $L_3$ = 25 mm, um 33.3 %, reduziert wird.

A5 Verkürzung des Weges durch Führung der Augen des Scharnierbandes

Während der Bolzenentriegelung sind die Augen des Scharnierbandes **5.2h-5.2j** (**Fig.** 19 bis 24) von einem Paar Stützarmen **5.4h** des anderen Scharnierbandes **5.1h** oder von einem Stützarm **5.4i, 5.4j** des anderen Scharnierbandes **5.1i, 5.1j** geführt. Zur Scvarnierentriegelung verringert sich die Zeit und Zugkraft, weil

- die Traglänge "$L_2$" kürzer ist;
- während der Bolzenentriegelung die Last "$F_{lxy}$" durch das Paar Stützarme oder durch den Stützarm aufgenommen wind; und
- nach der BoLzenentriegelung eine geringe Zugkraft von "$\mu \, F_{ly}$" für das Ziehen des gleitenden Stützarms **5.4i, 5.4j** oder Gleithalters **5.3h** erforderlich ist. Unter Last "$F_{lxy}$" verschieben sich die Scharnierbänder **5.2h-5.2j** der Fahrzeugtür, mit der Folge der Türentriegelung (**Fig.** 20).

A6 Verringerung der Zeit und Kraft durch Scharnierentriegelung

Nicht an dem Spreizelement **3a-3f** (**Fig.** 2 bis 11), sondern an der Oberfläche des Scharnierbaudes **5.1c** mit Durchmesser "d" (**Fig.** 5) üben "$F_{lx}$" und "$F_{ly}$" die Kraft aus. Bei Scharnierentriegelung ist die Steifigkeit des aufzuweitenden Scharnierbandes **5.1a-5.1f** für die Größe der Zugkraft "$Z_1$", "$Z_{20}$". "$Z_{lu}$", "$Z_{lo}$" des Seiles des Spreizelementes von großer Bedeutung. Fest steht, daß die Lasten "$F_{lx}$", "$F_{ly}$" und "$F_{lz}$" (**Fig.** 1) keinen Einfluß auf diese Zugkraft haben. Deshalb genügt eine sehr geringe Zugkraft zum Aufiveiten beider Scharnierschenkel **5.11a-5.11f; 5.12a-5.12f** oder Aufsprengen des Scharnierbandes **5.1a-5.1f** durch

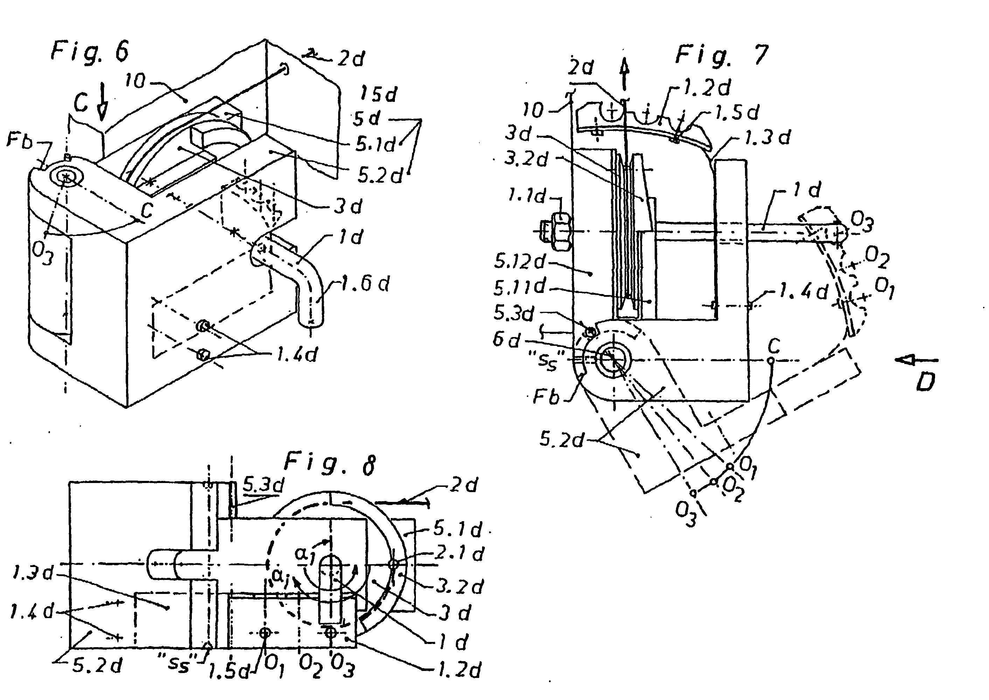

- translatorische Bewegung des Spreizstiftes **3a-3c,** dessen Endabschnitt **3.2a-3.2c** (**Fig.** 2 bis 5 konusförmig ist;
- rotatorische Bewegung der Spreizscheibe **3d-3e,** deren Randdicke "$t_i$" (**Fig.** 6 bis 10) zunimmt; oder
- rotatorische Bewegung der Spreizscheibe **3f**, deren Seite einen Neigungswinkel "$oe_o$" (**Fig.** 11) hat.

Zur Kostensenkung läßt sich das Schamierband **5.1a-5.1f** als Strangpreßprofil oder Stranggußteil herstellen.
Nachdem der Anschlagring **3.3a** des Spreizstiftes **3a** mit dem größten Durchmesser "d" (**Fig.** 2) durch Zugkraft "$Z_{20}$" des Seiles **20a** zum Anschlag kommt, muß zur Bolzenentriegelung das Seil **2a** gezogen werden. Schwierig gestaltet sich das Ziehen beider Seile nacheinander wegen der Abstimmung untereinander. Lösbar ist dieses Problem durch

- ein aus zwei Seilabschnitten mit Spiel bestehendes Seil **2b**, durch Ziehen dessen zweiten Seilabschnittes zuerst der Spreizstift **3b** zwecks Aufweiten oder Aufsprengen des Scharnierbandes (**Fig.** 3) bewegt wird. Im Falle des Aufweitens des Scharnierbandes wird das Seil **2b** des Scharnierbolzens **6b** zur Bolzenentriegelung weiter gezogen;
- ein Seil **20c**, durch dessen Zugkraft "$Z_{20}$" der Spreizstift **3c** zwecks Aufsprengen des Scharnierbandes (**Fig.** 4) bewegt wird;
- die zum Aufweiten und/oder Aufsprengen des Scharnierbandes drehbare Spreizscheibe **3d-3f**. Der Winkel "$oe_1$" ist zwar beliebig, aber auf 270° gewählt (**Fig.** 8). Große Abnahme der Zugkraft nach **Gl.** (3) wird durch Vergrößerung des Winkels erzielt; oder
- Anbringen eines Paares Sollbruchstellen an die gegenüberliegenden Stirnflächen des Schamierbandes **5.1c-5.1f** im Bereich "s" bis "$s_s$" (**Fig.** 4, 7 bis 11). Die Steifigkeit des durch die Sollbruchstellen "$s_s$" geschwächten Schar-nierbandes wird durch Vergrößen des Außendurchmessers "D" des Scharniers erhöht (**Fig.** 5).

A7 Freifliegende Fahrzeugtüren

Durch plötzliche Türentriegelung wird große Energie freigegeben. Die Gefahr besteht darin, daß die durch große Energie belasteten Fahrzeugtüren den Hilfspersonen zufliegen und sie schwer/tödlich verletzen. Als Gegenmaßnahmen wird die freifliegende Fahrzeugtür durch ein Faugband **1, 1S-1U (Fig.** 1, 3, 14) oder einen Fangstift **1d (Fig.** 6 bis 8) abgefangen.

Zum Abnehmen der Fahrzeugtür nach der Türentriegelung

- werden die Fangbänder **1** getrennt oder
- wird die Spannfeder **1.3d** eingedrückt, um den Faagstift **1d** aus dem Rastelement **1.2d** freizubekommen. Beide Scharnierbänder des anderen Türscharniers können durch ein Fangband **1** gesichert werden.

Als Bestandteil einer Türhalteeinrichtung beim Türöffnen in Position "$O_1$", "$O_2$" oder "$O_3$" findet der Fangstift **1d** eine weitere Verwendung.

A8 Aktivieren der Freilaufvorrichtung zur Türentriegelung

Zwecks Kosteneinsparung werden die Sensoren **84A-84C, 84F, 84G** der Front- und Seitenairbags **85A-85C,** des Gurtstrammers **91.9, 91.9S** und des mit Klemmvorrichtung ausgestatteten Gurtaufrollers **92** mitverwendet. Für die Erfassung der Beschleunigungsänderung beim Heckaufprall oder Überschlagen sind diese Sensoren weniger geeignet. Ein Cabrio aus der gehobenen Klasse ist mit einem Überrollbügel gemäß DE 4130470 C1 (US 5,284,360) ausgestattet. Zum Insassenschutz beim Überschlagen wird dieser nichtgezeichnete Überrollbügel **93** durch einen nichtgezeichneten Sensor **84H** aktiviert. Angesichts größerer Genauigkeit durch die Erfassung der Beschleunigungen in x-, y- und z-Richtung empfiehlt sich der neue 3-D Sensor, worüber das Fraunhofer Magazin 4/1997 berichtete, für den Einsatz.

Da Züge nur in einer einzigen Richtung fahren, genügt ein Sensor zur Erfassung der Beschleunigungsänderung bei der Front- oder Heckkollision.

Für die Erfassung des Feuers **66** im Motorenraum **65** durch Riß der Benzinleitung, im Flugzeug oder Kraftfahrzeug durch Tankexplosion oder im Zug ist ein Temperatur-Sensor **84D** vorgesehen.

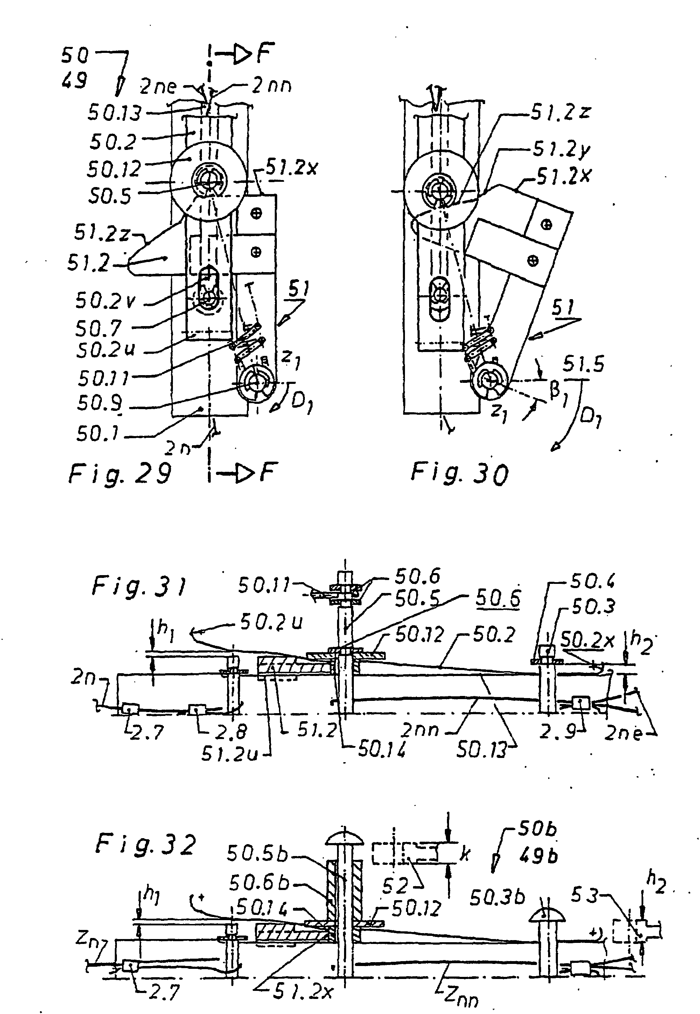

Um einen Diebstahl im Fahrzeug vorzubeugen, wird eine Freilaufvorrichtung **50, 50a** der Türentriegelungsvorrichtung **(Fig.** 30, 36) vorzugsweise beim Unfall aktiviert. Zwar läßt sich sie nach Beendigung des Uafällvorganges aktivieren, allerdings mit dem Nachteil einer Zeitverzögerung.

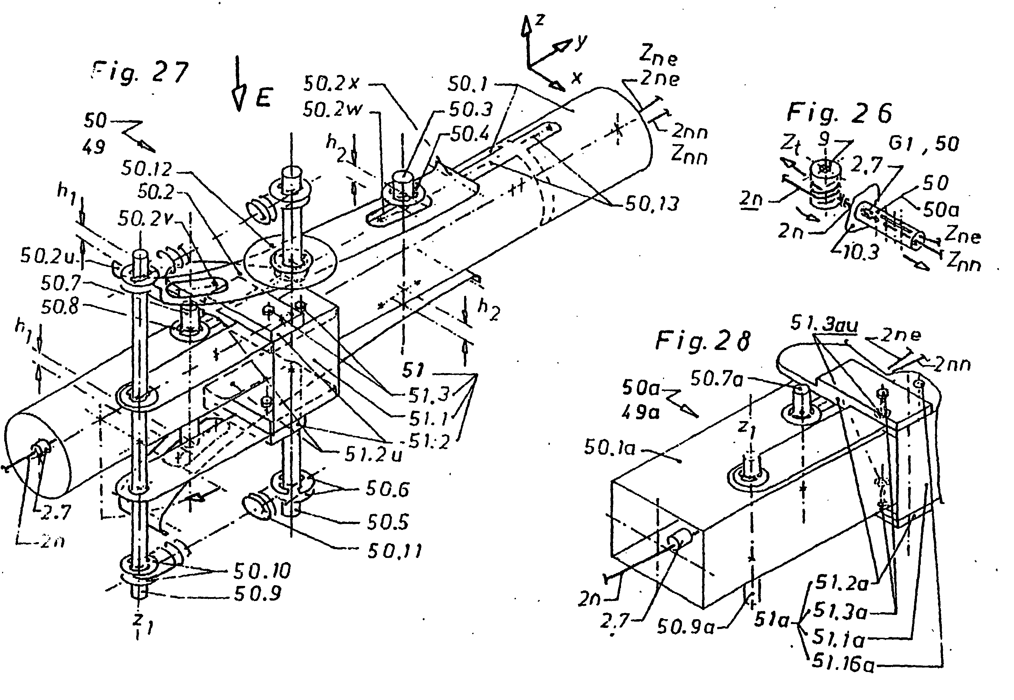

Wenn sich kein Unfall ereignet und wenn die Entriegelungsgriffe **86, 88A-88D, 91.1, 91.2S, 91.1S,** doch betätigt werden, bewegen sich zwar die Seile **2n1-2nn**, aber das Seil **2n (Fig.** 26 bis 29, 31, 32) nicht. Die Freilaufvorrichtung ist im Entriegelungszustand (Freilauf) und die Scharniere der Türen bleiben intakt.

Beim Unfall hingegen aktiviert der Sensor einen nichtgezeichneten Motor **51.5** zur Drehung des Sperrgehäuses **51, 51a** mit Steuerkanten **51.2x, 51.2y, 51.2z** um die $z_1$-Achse in Drelirichtung "$D_1$" **(Fig.** 27 bis 29). Bei Drehwinkel "$\beta_1$" **(Fig.** 30) kommen die Steuerkanten **51.2z** in Berührung mit den beiden Distanzringen **50.14,** deren Welle **50.5** durch die Federn **50.11** vorgespannt ist. Nachdem die Haltesegmente **51.2u** weiter geschwenkt werden, rasten beide Endabschnitte der Welle **50.7** in die Längslöcher **50.2v** beider Blattfedern **50.2** ein und sind in formschlüssiger Verbindung. Die Freilaufvorrichtung ist im Sperrzustand. Somit ist das Seil **2n** mit den Seilen **2n1-2nn** in loser Verbindung. Das Ziehen eines davon hat die Bewegung der Wellen **50.7, 50.5, 50.3** entlang den Längslöchern **50.13** und die Türentriegelung zur Folge.

Falls bedingt durch das Sicherheitskonzept die Stromversorgung durch die Autobatterie **89 (Fig.** 33, 36) bei Unfall unterbrochen werden muß, können beispielsweise wiederaufladbare Batterien **89a** (nicht gezeichnet) die Stromversorgung übernehmen. Durch den Anschluß an den Stromkreis wird das Aufladen der Batterien während der Fahrt gesichert.

Zusätzliche Schalter und Hebel als Entriegelungsgriffe stiften Verwirrung insbesondere bei deu unter Schock wegen des Unfalles stehenden Insassen. Beim Aussteigen sind die Insassen gewöhnt, die Fahrzeugteile wie Handbremshebel, Schalter, Drucktasten und/oder Lösetasten der Gurtschlösser zu betätigen. Bei der Auswertung der Unfallfahrzeuge ist die

Deformation des Lenkrades und Fußraumes sowie die Intrusion der Pedale festgestellt worden. Daher scheidet weitere Verwendung von nichtgezeichnetem Mercedes-Fußbremshebel, Bremspedal **82,** Kupplungspedal **81,** Lenkrad **80** und nichtgezeichneten Schaltern am Armaturenbrett **(Fig.** 36) aus.

Um die Herstellungskosten so niedrig wie möglich zu halten und die gewöhnten Abläufe beim Aussteigen aus dem Fahrzeug beizubehalten, kommen folgende Fahrzeugteile für die Türentriegelung nach Beendigung des Unfalles unter Beibehaltung der jeweiligen Funktion zum Einsatz:

- Handbremshebel **86**, der fiir alle Insassen erreichbar ist. Da der Handbremshebel **86** sowohl mit Bremsseil **86.3** als auch mit Hilfsseil **86.2** verbunden ist, muß ein Getriebe **G3** für Dualoperation "Handbremsen und Türentriegelung" mit einer Einstellmöguchkeit versehen sein. Wegen des Untersetzungsverhältnisses "$c_2/(c_1 + c_2)$" werden die Abstände beider Seilringe **86.6, 86.7** zu der $z_2$-Achse durch Schieben entlang ihren zugehörigen Teilen **73.2, 73.4** eingestellt. Danach werden die beiden Seilringe am Lenker **73** durch Festauzieben zweier Paare Muttem **73.3, 73.5** gesichert. Ausschließlich durch Aktivieren der Freilaufvorrichtung beim Unfall bewirkt das Schwenken des Handbremshebels nach Beendigung des Unfalles um $x_2$-Achse

  * das Handbremsen bei Drehwinkel "β" und
  * die Türeatriegelung bei einem Drehwinkel bis zu "β";

- Drucktaste **91.2, 91.2S** des Gurtschlosses **91, 91S**. Durch Drücken der Drucktaste nach Beendigung des Unfalles schaltet das Auslösekabel **91.3** den mit Strom durch Sensor **84A-84H** ausschließlich beim Unfall versorgten Motor **91.7** ein; und/oder
- Lösetaste **91.1, 91.1S** des Gurtschlosses **91, 91S**. Durch Drücken der Lösetaste nach Beendigung des Unfalles wird die Verbindung mit dem Sicherheitsgurt **90, 90S** aufgelöst und schaltet das Auslösekabel **91.3** über das Seil **91.5** den mit Strom durch Sensor **84A-84H** ausschließlich beim Unfall versorgten Motor **91.7** ein;
- Entriegelungsgriffe **88A-88D**.

Wird ein entlang einem Felsen fahrender PKW durch einen LKW seitlich gerammt, mit der Folge, daß beide Fahrzeuge ineinander verkeilt sind, dann muß ein Zugang für die Hilfspersonen zu dem deformierten PKW zuerst geschaffen werden. Da viel Zeit verloren gebt, verschlimmert sich der Verletzungszustand bei unerträglichem Schmerzen. Aus dem Grunde muß mindestens ein Zugang zum Entriegelungsgriff für die Hilfspersonen **(Fig.** 36) immer sichergestellt werden:

- Eutriegelungsgriffe **88A, 88B**. Fahrzeug fiir Rechtsverkehr wird mit einem Raum **77R** für das Benzui-Emfüllrohr **87.1** samt Tankdeckel **87.2** oder für Linksverkehr mit einem Raum **77L** konzipiert. Vorzugsweise werden die beidseitigen Räume **77R, 77L** fiir die Unterbringung beider Entriegelungsgriffe nützlich gemacht. Bei einer Seitenkollision beispielsweise gegen einen Brückenpfeiler ist einer davon immer zugänglich;
- Entriegelungsgriff **88C** am Fahrzeugboden. Bei einem auf Dach liegenden Fahrzeug ist er immer zugänglich; und
- Entriegelungsgriff **88D** zum Öffnen des Kofferraumdeckels **8Y**. Da dieser Griff zwei Funktionen erfüllen muß, ist eine Übersetzung mittels eines dem Lenker **73** ähnlichen Lenkers **74** notwendig.

A9 Selbständige Türeutriegelungsvorrichtung

Für Schiffe und Flugzeuge sind die beiden Ausführungsformen wegen großer Entfernung der Entriegelungsgriffe zu den Türen sowie Nottüren und wegen hoher Anzahl der Entriegelungsgriffe der Sitze, beispielsweise 600 Sitze des Airbus A3xx zu aufwendig und teuer. Vorteilhaft ist eine Anordnung der selbständigen Türentriegelungsvorrichtungen an den weit voneinander liegenden Türen.

A10 Warnsystem zur visuellen und akustischen Anleitung

Selbst wenn das Unfallfahrzeug mit einer Türentriegelungsvorrichtung von außen gekennzeichnet ist, haben die Hilfspersonen in Dunkelheit Probleme, das Unfallfahrzeug und die Entriegelungsgriffe zu finden sowie die Griffe zu bedienen. Ist die Waniblinkanlage des Unfallfahrzeuges nicht eingeschaltet, besteht die Gefahr, daß die geretteten Insassen und/oder die Hilfspersonen von einem herannahenden Fahrzeug überfahren werden.
Steht das Uniallfahrzeug durch Riß der Benzinleitung und/oder Explosion des Tanks in Brand, geraten die Insassen wegen der Flammen und des Entzuges des Sauerstoffes in Panik. Es ist nachzuvollziehen, daß sie die Entriegehmgsgriffe weder finden noch bedienen. Aus Verzweiflung versuchen sie vergeblich, die festgeklemmten Türen in herkömmlicher Weise aufzumachen. Da Flammen eine Menge Sauerstoff verbrauchen, ist die Zeit für die Rettung durch eigene Kräfte und/oder die Hilfspersonen aus dem Unfallfahrzeug äußerst knapp. Die Türentriegelungsvorrichtung bleibt ungenutzt. Es bedarf eines visuellen und akustischen Warnsystems **70, 70a-70c (Fig.** 33 bis 37), um den Insassen und/oder Hilfspersonen

- die Position der Entriegelungsgriffe durch Wambimen **4e-4n** und die Position des Unfallfahrzeuges durch Warnbirnen **4a-4d** anzuzeigen und
- eine Anleitung zur Bedienung der Entriegelungsgriffe durch Lautsprecher **7a-7n** und/oder Lautsprecher des Telefons zu liefern.

Durch das Blinken der Warnbirnen **4a-4d** werden die Fahrer herannahender Fahrzeuge auf das Unfallfahrzeug aufmerksam gemacht. Es obliegt der Entscheidung des Auto-, Flugzeug- und Zugherstellers, ob das Warnsystem seit Beginn des Unfalles, während des Unfalles oder nach dem Unfall eingeschaltet wird. Vorteilhaft scheint es, daß sie seit Beginn des Unfalles eingeschaltet wird, weil die Insassen noch voll im Besitz ihres Denkvermögens sind und mehr Zeit den Fahrern nachfolgender Fahrzeuge zur Verfügung steht. Als zuverlässiges akustisches Warnsystem wird/werden das Telefon, Radio und/oder Navigationsgerät durch

- den im Stromkreis beim Unfall versorgten Strom oder
- die Betätigung des an den Hauptstromkreis angeschlossenen Schalters beim Unfall automatisch eingeschaltet.

Nachfolgend werden anhand der Zeichnungen mehrere Ausführungsformen der Erfindung unter Berücksichtigung des xyz Koordinatensystems näher erläutert. Es zeigen:

**Fig. 1** eine perspektivische Ansicht einer 1. Ausführungsform eines unter Belastung "$F_1$" stehenden Türscharniers **5,** dessen Scharnierband **5.1** an der Karosserie **10,** dessen anderes Scharnierband **5.2** an der Fahrzeugtür **8** befestigt ist und dessen Fangband **1** beide Scharnierbänder miteinander lose verbindet sind sowie dessen Scharnierbolzen **6** oder **6.** mit Seil **2** oder **2.** versehen ist.

**Fig.** 2 eine perspektivische Ansicht einer 2. Ausführungsform eines Scharnierbandes **5.1a**, dessen längsverschiebbares Spreizelement **3a** mit Anschlagring **3.3a** zwischen dessen beiden Scharnierschenkeln **5.11a, 5.12a** angeordnet ist.

**Fig.** 3 eine perspektivische Ansicht einer 3. Ausführungsform eines Scharnierbandes **5.1b,** dessen längsverschiebbares Spreizelement **3b** zwischen dessen beiden Scharnierschenkeln **5.11b, 5.12b,** die mittels Fangbandes **1** miteinander lose verbunden sind, angeordnet ist.

**Fig. 4** eine perspektivische Ansicht einer 4. Ausführungsform eines Scharnierbandes **5.1c,** dessen längsverschiebbares Spreizelement **3c** zwischen dessen beiden Scharnierschenkeln **5.11c, 5.12c** angeordnet ist und an dessen beiden Stirnflächen im Bereich von "s" bis "$s_s$" Sollbruchstellen angeordnet sind.

**Fig.** 5 Schnittzeichnung des Scharnierbandes **5.1c** unter Belastung "$F_{1x}$" und "$F_{1y}$" längs der Linie A-A nach **Fig.** 4.

**Fig.** 6 eine perspektivische Ansicht einer 5. Ausführungsform eines Türscharniers **5d**, dessen drehbares Spreizelement **3d** zwischen dessen beiden Scharnierschenkeln **5.11d, 5.12d**, die mittels Fangbandes **1d** miteinander lose verbunden sind, angeordnet ist.

**Fig.** 7 eine Ansicht einer Türhalteeinrichtung *mit dem* Türscharnier **5d** bei *der* in Position "$O_1$", "$O_2$" oder "$O_3$" *offen gehaltenen* Tür gemäß Pfeil C nach **Fig.** 6.

**Fig.** 8 eine Ansicht der Türhalteeinrichtung beim Türöffnen in Position "$O_3$" gemäß Pfeil D nach **Fig.** 7.

**Fig.** 9 schematische, perspektivische Ansicht einer 6. Ausfuhrungsform eines Scharnierbandes **5.1e** mit Haltestift **3.1e** und drehbarem Spreizelement **3e.**

**Fig.** 10 Schnittzeichnung des Scharnierbandes **5.1e** längs der Linie B-B nach **Fig.** 9.

**Fig.** 11 Schnittzeichnung einer 7. Ausführungsform eines Scharnierbandes **5.1f,** dessen Scharnierschenkel **5.11f** um "$oe_o$" geneigt ist.

**Fig.** 12 eine perspektivische Ansicht einer 1. Ausführungsform eines Getriebes **G1** zur Reduzierung der Zugkraft "$Z_t$" und einer Ausführungsform einer Sperrvorrichtung mit Sperrwelle **11.**

**Fig.** 13 eine perspektivische Ansicht einer 2. Ausführungsform eines Getriebes **G2** zur Reduzierung der Zugkraft "$Z_t$".

**Fig.** 14 eine perspektivische Ansicht eines Fahrzeuges mit Türscharnieren **5, 5S, 5T, 5U,** Fangbändern **1, 1S, 1T, 1U** und schwenkbarer Klappe **87A**, wobei die Fahrzeugtüren **8, 8S,** Hecktür **8T** und Motorhaube **8U** durch "F", "$F_S$", "$F_T$" und "$F_U$" belastet werden.

**Fig.** 15 eine Seitenansicht eines Unfallfahrzeuges, zwischen dessen festgeklemmter Tür **8j** und dessen Dach **10.1** der Kopf **60.1** des Fahrers festgeklemmt wird.

**Fig.** 16 eine Seitenansicht eines brennenden Fahrzeuges.

**Fig.** 17 und 18 schematische, perspektivische Ansicht einer 8. Ausführungsform eines Türscharniers **5g,** an dessen Kopplungselementen **6.1o, 6.1u** zwei Bolzenteile **6go, 6gu** und ein Paar ineinander verschiebbare Führungsrohre **6.5o, 6.5u** befestigt sind.

**Fig.** 19 eine perspektivische Ansicht einer 9. Ausfuhrungsform eines Turscharniers **5h,** dessen durch Gleithalter **5.3h** gehaltene Stützarme **5.4h** mit den Augen des Scharnierbandes **5.2h** formschlüssig verbunden sind.

**Fig. 20** eine Ansicht des Türscharniers **5h,** dessen Scharnierband **5.2h** durch "$F_{1xy}$" belastet wird, gemäß Pfeil H nach **Fig.** 19.

**Fig.** 21 eine perspektivische Ansicht einer 10. Ausfiihrungsform eines oberen Türscharniers **5i**, durch desseu im Scharnierband **5.1i** längsverschiebbaren Stützarm **5.4i** die Augen des Scharnierbandes **5.2i** abgestützt werden, sowie einer Ausführungsform der Umlaufrollen **30, 32, 33**, Seile **2, 2iu, 20i, 21i**, des Seiles **2io** eines unteren Türscharniers **5io** der Fahrzeugtür **8**$_i$ und des gemeinsamen Seiles **2** der Türentriegeluugsvorrichtung **15i**.

**Fig.** 22 eine Ansicht des Türscharniers 5i, dessen Scbamierband **5.2i** unter Belastung "F$_{1xy}$" gemäß Pfeil I nach **Fig.** 21.

**Fig.** 23 Schnittzeichnung des Scharnierbandes **5.1i,** worin der Stützarm **5.4i** durch Haltestift **25i** gesichert wird, längs der Linie J-J nach **Fig.** 21.

**Fig.** 24 eine perspektivische Ansicht einer 11. Ausfuhrungsform eines Turscharniers **5j,** durch dessen entlang dem Schamieztand **5.1j** längsverschiebbaren Stützarm **5.4j** die Augen des Scharuierbandes **5.2j** abgestützt werden.

**Fig.** 25 eine perspektivische Ansicht einer 1. Ausführungsform eines Entriegelungsgriffes **86** und 3. Ausführungsform eines Getriebes **G3** für die Dualoperation "Handbremsen und Türentriegelung".

**Fig.** 26 eine perspektivische Ansicht des Getriebes **G1** mit Eingangsseil **2n** und Ausgangsseil **2n** sowie einer Freilaufvorrichtung mit Ausgangsseilen **2n1-2nn.**

**Fig.** 27 und 28 eine perspektivische Ansicht einer 1. und 2. Ausführungsform einer Freilaufvorrichtung **50, 51** mit U-förmigem Sperrgehäuse **51, 51a** im Entriegelungszustand (Freilauf).

**Fig.** 29 und 30 eine Ansicht der Freilaufvorrichtung **50** mit U-förmigem Sperrgehäuse **51** im Entriegelungs- und Sperrzustand gemäß Pfeil E nach **Fig.** 27.

**Fig.** 31 Schnittzeichnung der Freilaufvorrichtung **50** mit U-förmigem Sperrgehäuse **51** im Entriegelungszustand längs der Linie F-F nach **Fig.** 29.

**Fig.** 32 Schnittzeichnung einer 3. Ausführungsform einer Freilaufvorrichtung **50b** mit U-förmigem Sperrgehäuse **51b** im Entriegelungszustand längs der Linie F-F nach **Fig.** 29.

**Fig.** 33 eine perspektivische Ansicht einer 2. und 3. Ausführungsform eines Entriegelungsgriffes **91.1** und **91.1S** sowie einer 1. Ausfuhrungsform eines Warnsystems **70.**

**Fig.** 34 eine perspektivische Ansicht einer 2. Ausführungsform der Teile **71a, 72a** eines Warnsystems **70a.**

**Fig.** 35 eine perspektivische Ansicht einer 3. Ausführungsform der Teile **71b, 72b** eines Warnsystems **70b.**

**Fig.** 36 eine perspektivische Ansicht einer 1. bis 7. Ausführungsform eines Entriegelungsgriffes **86, 91.1, 91.2S, 88A-88D,** einer 1. Ausführungsform eines Rettungssystems **55** mit Sensoren **84A-84G,** Getriebe **G1,** Freilaufvorrichtung 50, Tüzeutriegelungsvorrichtung **15, 15a-15j** und Warnsystem 70 und eines Fahrzeuges, dessen Umriß durch die Türen **8, 8S, 8U, 8Y**, die vordere Stoßstange **12V,** hintere Stoßstange **12H** und vier Warnbirnen **4a-4d** definiert wird,

**Fig.** 37 eine Ansicht einer 3. Ausfuhrungsform eines Rettungssystems **55c** eines Transportmittels.

Anwendbar sind die erfindungsgemäßen Merkmale für Züge, Bahnen, Schiffe, Boote, Flugzeuge und Kraftfahrzeuge (PKW mit einer beliebigen Anzahl von Fahrzeugtüren, LKW, Bus).

Der Vorteil der Befestigung des Scharnierbandes **5.1, 5.1a-5.1j** an der Karosserie **10** und des anderen Scharnierbandes **5.2, 5.2a-5.2j** an der Fahrzeugtür **8, 8S-8Y** liegt darin, daß die Türentriegelungsvorrichtung durch die Anordnung an der Karosserie, die entscheidend steifer als die Fahrzeugtür ist, vor einer Deformation besser geschützt ist. Zwar ist das Vertauschen der fest anzubringenden Scharnierbänder möglich, allerdings mit folgenden Nachteilen:

- Das Versagen tritt ein, wenn die in der deformierten Fahrzeugtür angeordnete Türentriegelungsvorrichtung durch große Aufprallenergie deformiert wird.
- Im Innenraum der Fahrzeugtür werden der Seitenairbag, elektrische Fensterheber, Lautsprecher 7e, das Türschloß mit Diebstahlsicherung und einige Verstärkungselemente **8.1** untergebracht. Ob noch Platz für die Türentriegelungsvorrichtung vorhanden ist, darf bezweifelt werden.

Bei der 1. Ausführungsform des Türscharniers gemäß **Fig.** 1, 14-16, 36 erfolgt die drehbare Verbindung der durch Verstärkungselemente **8.1** versteiften Fahrzeugtür **8, 8S** mit der A- oder B-Säule der Karosserie **10** über mindestens zwei herkömmliche Türscharniere **5, 5S.** Durch folgende Merkmale ist die Türentriegelungsvorrichtung **15, 15a-15j** der Fahrzeugtür **8, 8S-8Y** realisierbar:

1. *Der Scharnierbolzen **6, 6**$_o$ muß für die Aufnahme des Seiles **2, 2**$_o$ verlängert werden (**Fig.** 1, 15).* Das Seil **2**$_o$ verbindet beide Scharnierbolzen **6, 6**$_o$ miteinander. An der 2. Bohrung des Scharnierbolzens **6** des unteren Türscharniers **5**$_2$ ist das Seil **2** für die Türentriegelung befestigt.

2. Aus dem vereinten Seil **2iu** und Seil **2io** des oberen und unteren Türscharniers wird ein gemeinsames Seil **2, 2** beispielsweise fiir die Türentriegelung der 10. Ausführungsform (**Fig.** 21) gebildet.

Bei der 2. bis 4. Ausführungsform des Türscharniers gemäß **Fig.** 2-5 wird das Seil **2a-2c** mit Kugel **2.2a-2.2c** durch das durchgehende Loch des Scharnierbolzens **6a-6c** zwecks Bolzenentriegelung gesteckt. Zwecks Geräuschdämpfung empfiehlt sich die Verwendung eines geräuschdämpfenden Materials **3.5a-3.5c** auf den zylindrischen Teil **3.1a-3.1c** des längsverschiebbaren Spreizelementes **3a-3c,** *der zwischen* die beiden Scharnierschenkel **5.11a-5.11c; 5.12a-5.12c** *eingeschoben und* vorgespannt wird.

Von großer Bedeutung für das Aufweiten beider Scharnierschenkel oder den Bruch des Scharnierbandes ist der konusförmige Teil **3.2a-3.2c,** der durch "$d_1$", "$d_2$" und "$L_d$" bestimmt wird. Ist der Weg "$L_n$" für die Bolzenentriegelung, dann muß der zylindrische Teil **3.4b** eine Länge von $L_m > L_n$ haben.

Bei der 5. bis 7. Ausführungsform des Türscharniers gemäß **Fig.** 6-11 wird der Haltestift **2.1d-2.1f** des Seiles **2d-2f** in das Halteloch der drehbaren Spreizscheibe **3d-3f** gesteckt. Diese Spreizscheibe mit dem geräuschdämpfenden Material **3.5d-3.5f** wird zwischen die beiden Scharnierschenkel **5.11d-5.11f; 5.12d-5.12f** eingeschoben *und von jenen vorgespannt.* Die drehbare Lagerung erfolgt über das Verschrauben

- des Haltestiftes **3.1c, 3.2f** mit dem Scharnierschenkel **5.12e, 5.12f** oder
- des Fangstiftes **1d** mit dem Scharnierschenkel **5.12d** und der Mutter **1.1d.**

Das Aufweiten beider Scharnierschenkel und/oder Aufsprengen des Scharnierbandes wird/werden durch

- die Dicke "$t_i$" des spreizenden Segmentes **3.2d, 3.2e** in Abhängigkeit von Drebwinkel "$oe_i$" **(Fig.** 9) oder
- den Neigungswinkel "$oe_o$" der Spreizscheibe **3f** und des Scharnierschenkels **5.11f (Fig.** 11)

bestimmt.

Die Türhalteeinrichtung umfaßt

- ein Rastelement **1.2d,** dessen Spannfeder **1.3d** an dem Scharnierband **5.2d** durch zwei Stifte **1.4d** zur Vorspannung und zum Halten der geöffneten Tür befestigt ist, und
- den Faugstift **1d,** dessen nach unten gerichteter Teil **1.6d** in eine der Ausnehmungen des vorgespannten Rastelementes **1.2d** bei der Positionierung der geöffneten Tür in "$O_1$", "$O_2$" oder "$O_3$" einrastet.

In Position "$O_3$" wird die Türöffnung durch die Berührung beider Kontaktflächen **Fb** mit den Anschlagstiften **5.3d** begrenzt.

Beim Türschließen in Position "C" wird das Scharuierband **5.2d** geschwenkt, in dessen Aussparung sich der Fangstift **1d** einschiebt.

Bei der 8. Ausführungsform des Türscharniers gemäß **Fig.** 17-18 sind zwei Bolzenteile **6go, 6gu** des Scharnierbolzens **6g** und ein Paar ineinander verschiebbare, formschlüssig verbundene Führungsrohre **6.5o, 6.5u** an den zugehörigen Kopplungselementen **6.1o, 6.1u** befestigt. Durch einen Gleitschuh **6.4,** ein Paar obere Lenker **6.2o** und ein Paar untere Lenker **6.2u** sowie vier Stifte **6.3** sind diese Kopplungselemente miteinander verbunden. Nach Schieben durch den Gleitschub **6.4** und das Scharnierband **5.1g** wird

- die Zugstange **2g** durch einen Sicherungsring **2.1g,** der zugleich als Anschlagring dient, und
- der Gleitschuh **6.4** durch einen Stift **6.6** gesichert.

Wird die Zugstange **2g** bis zum Anschlag bewegt, dann werden die Kopplungselemente **6.1o, 6.1u** in entgegengesetzter Richtung verschoben, mit der Folge des Auflösens der formschlüssigen Verbindung des Scharnierbandes **5.2g** mit den beiden Bolzenteilen.

Bei der 9. bis 11. Ausfüfanmgsform gemäß Fig. 19-24 wird das Seil **2h-2j** mit Kugel **2.2h-2.2j** durch einen Schmutzfänger **2.6** mit Sollbruchstelle "s" und das Loch des Scharnierbolzens **6h-6j** gesteckt.

Bei der 9. Ausfühnuagsform werden die beiden Stützarme **5.4h** durch Einrasten der Köpfe beider Halbrundnieten **5.5h** in die Haltelöcher **5.31h** des entlang einem Paar Gleitflächen **5.6h** gleitend verschobenen Gleithalters **5.3h** gesichert.

Bei der 10 bis 11. Ausführungsform wird der im oder am Scharnierband **5.1i, 5.1j** gleitend verschiebbare Stützarm **5.4i, 5.4j** durch Einstecken eines Haltestiftes **25i, 25j** mit Rändel **25.1i, 25.1j (Fig.** 21, 23, 24) gesichert.

Die drehbare Verbindung der beiden Scharnierbänder **5.1h-5.1j; 5.2h-5.2j** miteinander wird durch den Scbarnierbolzen **6h-6j** und die Berührung der beiden Augen des Scharnierbandes **5.2h-5.2j** mit

- den Stützarmen **5.4h** oder
- dem Stützarm **5.4i, 5.4j** und einem Paar Kreissegmenten **5.7i, 5.7j** des Scharnierbandes **5.1h-5.1j.**

aufrechterhalten. Die runde Form des Haltegabels **5.41h** verbessert die formschlüssige Verbindung mit dem Auge. Durch die Berührung beider Kontaktflächen **Fb** mit

- den Kontaktflächen **Fa** der beiden Stützarme **5.4h** oder
- der Kontaktfläche **Fa** des Stützarmes **5.4i, 5.4j** wird der Öffnungsbereich der Tür begrenzt.

Zur Schaznierentriegelung der 9. Ausführungsform wird zuerst der Gleithalter **5.3h** durch das Seil **20h** weggezogen, dann wird nach Bruch der Sollbruchstelle des Schmutzfängers **2.6** der Scharnierbolzen **6h** aus dem Scharnierloch durch das Seil **2h** herausgezogen. Unter Last "$F_{1xy}$" schwenken sich beide Stützarme **5.4h** samt Scharnierband **5.2h** um die Achse beider Nieten **5.5h** von Position "$P_0$" zu "$P_1$" (**Fig.** 20).

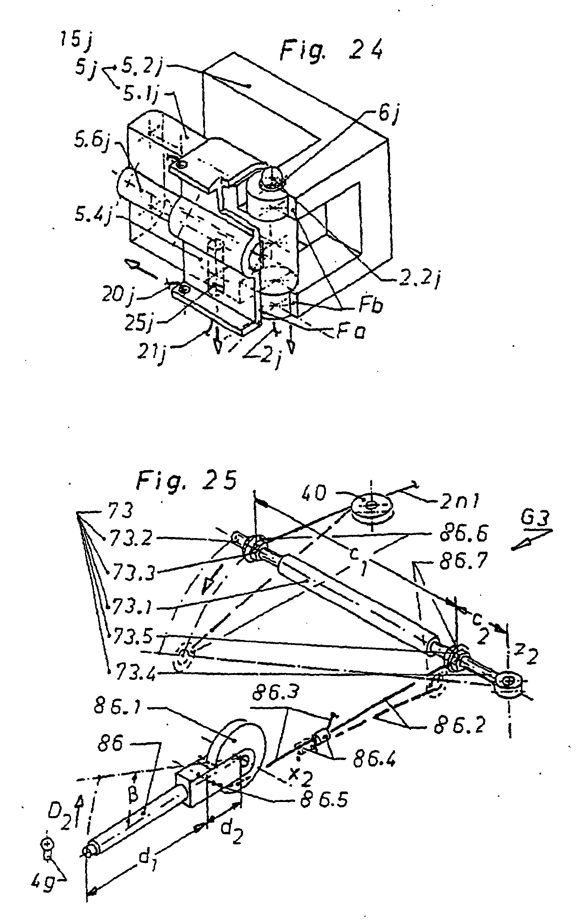

Zur Scharnierentriegelung der 10. und 11. Ausführungsform wird zuerst der Haltestift **25i, 25j** aus dem Loch durch Ziehen des Seiles **21i, 21j** entfernt, dann wird nach Bruch der Sollbruchstelle des Schmutzfängers **2.6** der Scharnierbolzen **6i, 6j** aus dem Scharnierloch durch das Seil **2iu, 2j** herausgezogen. Anschließend wird der Stützarm **5.4i, 5.4j** durch das Seil **20i, 20j** weggezogen. Unter Last "$F_{1xy}$" verschiebt sich das Scharnierband **5.2i, 5.2j** (**Fig.** 22). Dies hat die Bolzenentriegelung zur Folge.

Unter *Berücksichtigung* der Spiele für die Scharnierentriegelung (**Fig.** 21) wird das Seil **21i** und das durch Umlaufrolle **30** umgelenkte Seil **20i** mit dem Seil **2iu** des oberen Türscharniers **5i** durch eine Klammer **2.1i** festgeklemmt. Genauso wird das Seil **2io** des unteren Türschamiers gebildet. Die über die zugehörigen Umlaufrollen **32a, 32b** umgelenkten, vereinten Seile **2iu, 2io** werden zu einem gemeinsamen Seil **2** durch eine Klammer **2.3i** vereint.

Bei der 1. Ausführungsform des Getriebes **G1** gemäß **Fig.** 12, 26, 36 wird das Seil **2n, 2n** um die Umlaufrolle **9** gewunden. Um eine Seilbewegung in Richtung "$Z_t$" zu verhindern und ausschließlich in Richtung "$Z_n$" zu gestatten, wird das Seil durch eine Klammer **2.3a** vor einem Loch des Karosserieteiles **10.2** und eine Klammer **2.3b** vor einem Loch des Karosserieteiles **10.3 (Fig.** 12) gehalten. Bei bestimmter Konstruktion reicht eine einzige Klammer **2.3b** für diese Aufgabe aus.

Durch die Klammer **2.3b** werden die Seile **2n1** bis **2nn** der Entriegelungsgriffe zusammengehalten. Die Zugkräfte "$Z_{n1}$" bis "$Z_{nn}$" werden diesen Seilen zugeordnet.

Durch Erhöhung der Reibungszahl beim Überziehen des Seiles mit dem Schlauch **9.8** verringert sich die Zugkraft "$Z_n$" nach **Gl.** (5) enorm.

Bei der 2. Ausführungsform des Getriebes **G2** gemäß **Fig.** 13 wird die Haltekugel **2.4** des Seiles **2n** in ein Halteloch der ersten Umlaufrolle **9.1a** mit Radius "$r_1$" und die Haltekugel **2.5** des Seiles **2n** in ein Halteloch der zweiten Umiaufrolle **9.2a** mit Radius "$r_2$" gesteckt, wobei $r_2 > r_1$ ist.

Bei der Ausfuhrungsform der Sperrvorrichtung gemäß **Fig.** 12 hat die Umlaufrolle **9**, **9.1a, 9.2a** ein Sperrloch an der Stirnfläche,

- worin die im Außenrohr **11.1** längsverschiebbare Sperrwelle **11** im Sperrzustand des Getriebes geschoben wird oder
- woraus die Sperrwelle **11** im Entriegelungszustand des Getriebes herausgezogen wird.

Bei der 3. Ausführungsform des Getriebes **G3** und der 1. Ausführungsform des Entriegelungsgriffes gemäß **Fig.** 25, 36 ist der Lenker **73, 74** ein Rohr **73.1**, an dessen erstem Ende ein Gewindestift **73.2** und an dessen zweitem Ende eine Augenschraube **73.4** befestigt ist. Zur Einstellung des Untersetzungsverhältnisses wird der Seilring **86.6** des durch eine Umlaufrolle **40** umgelenkten Seiles **2n1** entlang dem Gewindestift **73.2** und der Seilring **86.7** des Hilfsseiles **86.2** entlang der Augenschraube **73.4** positioniert. Danach werden die beiden Seilringe durch Festanziehen zweier Paare Muttern **73.3, 73.5** gesichert. Das Hilfsseil **86.2** wird am Bremsseil **86.3** durch eine Klammer **86.4** festgeklemmt. Durch Stecken eines Haltestiftes **86.5** *in den hinteren Abschnitt des Handbremshebels* **86** ist das von der *Umlaufrolle* **86.1** *umgelenkte* Bremsseil mit dem Handbremshebel **86** verbunden. Ist die Freilaufvorrichtung **50, 50a** im Sperrzustand, so hat das Schwenken des Handbremshebels **86** die Dualoperation "Handbremsen und Türentriegelung" bis zum Winkel "$\beta$" zur Folge.

Die 1. bis 3. Ausfuhrungsform der Freilaufvorrichtung **50, 50a-50b** gemäß **Fig.** 26-32, 36 umfaßt

- einen Verteiler **49, 49a-49b,** in dem das Eingangsseil **2n** mit dem Hauptausgangsseil **2nn** verbunden ist oder nicht, wobei das Hauptausgangsseil **2nn** und die Ergänzungsseile zu Ausgangsseilen **2n1-2nn** durch Klammer **2.9** zusammengeklemmt werden; und
- dessen Eingangsseil **2n** mit/von den Ausgangsseilen **2n1-2nn** verbunden/entriegelt ist; und
- ein Sperrgehäuse **51, 51a-51b** mit einem nichtgezeichneten Motor **51.5**.

Das Seil **2n** schlingt um die Welle **50.7** um. Das Ende wird durch eine Klammer **2.8** am Seilabschnitt festgeklemmt. Um eine Seilbewegung in Richtung "$Z_t$" zu verhindern und ausschließlich in Richtung "$Z_n$" zu gestatten, wird das Seil durch eine Klammer **2.7** oder **2.3b** vor dem Loch des Karosserieteiles **10.3 (Fig.** 12,26**)** gehalten. Bei Verzicht auf Klammer **2.8** übernimmt die Klammer **2.7 (Fig.** 32) deren Aufgabe.

Bei der 1. Ausführungsform der Freilaufvorrichtung gemäß **Fig.** 26, 27, 29-31, 36 besteht das Sperrgehäuse **51** aus einem Paar mit Steuerkanten **51.2x-51.2z** versehenen Steuerplatten **51.2** und einem U-förmigen Bügel **51.1,** der in kraftschlüssiger Verbindung mit den Steuerplatten durch vier Nieten **51.3** ist. Ein Paar kreisförmige Haltesegmente **51.2u** des Sperrgehäuses **51** wird am Rohr **50.1** formschlüssig gehalten. Durch Drehung des beim Unfall eingeschalteten Motors **51.5** trennen sich die Haltesegniente **51.2u** vom Rohr **50.1** und schwenkt sich das Sperrgehäuse **51** um die $z_1$-Achse der an das Rohr angeschweißten Welle **50.9** in Drehrichtung "D$_1$" **(Fig.** 27,29). Bei zunehmender Drehung des Sperrgehäuses berühren die Steuerkanten **51.2z** mit den Distanzringen **50.14** und verringert sich die Höhe der Längslöcher **50.2v** beider Blattfedern. Durch Drehung bis zum Drehwinkel "$\beta_1$" **(Fig.** 30) rasten beide Endabschnitte der Welle **50.7** in die Längslöcher **50.2v** ein. Die Freilaufvorrichtung ist im Sperrzustand.

Wird das Sperrgehäuse **51** weiter geschwenkt, stehen die Steuerplatten **51.2** der Welle **50.7** nicht im Wege. Somit können sich die Wellen **50.3, 50.5, 50.7** entlang dem Paar Längslöchern **50.13** des Rohres **50.1** des Verteilers **49** durch Ziehen des Seiles **2nn** zwecks Türentriegelung in y-Richtung bewegen.

Die Endabschnitte der Welle **50.7** des Seiles **2n,** die über die Längslöcher **50.13** ragen, werden durch zwei Sicherungsringe **50.8** gesichert. Die Endabschnitte der Welle **50.5,** die über die Längslöcher **50.13** und Löcher der Blattfedern **50.2** ragen, werden durch ein Paar Distanzringe **50.14,** ein Paar große Unterlegscheiben **50.12** und ein Paar Sicherungsringe <u>50.6,</u> ähnlich wie **50.6, (Fig.** 31) gesichert. Die Endabschnitte der Welle **50.3,** die über die Längslöcher **50.13** und Längslöcher **50.2w** beider Blattfedern **50.2** ragen, werden durch die Sicherungsringe **50.4** gesichert. Ein Paar Federn **50.11** an der Welle **50.9** spannt die Welle **50.7** vor, wodurch die Distanzringe **50.14** die Steuerkanten berühren, die vorgespannten Blattfedern **50.2** die Steuerplatten **51.2** berühren und über die Enden der Welle **50.7** um die Höhe "h$_1$" liegen. Die Spannkraft der Blattfeder ist in Abhängigkeit von der Höhendifferenz "h$_2$". Die Freilaufvorrichtung **50** ist im Entriegelungszustand.

Dank der abgerundeten Endabschnitte **50.2u, 50.2x** verkanten sich die Blattfedern **50.2** bei Bewegung entlang dem Rohr nicht.

Bei der 2. Ausführungsform der Freilaufvorrichtung gemäß **Fig.** 28 besteht das Sperrgehäuse **51a** aus dem Paar mit Steuerkanten versehenen Steuerplatten **51.2a** und dem U-förmigen Bügel **51.1a,** der in Steckverbindung und in kraftschlüssiger Verbindung mit den Steuerplatten durch zwei Paare Halbrundnieten **51.3a** und Senknieten **51.16a** ist. Wenn die Freuamvomchtmg **50a** im Entriegelungszustand ist, dann sind die *Halteköpfe* **51.3au** der beiden Halbrundnieten in Steckverbindung mit den Löchern des viereckigen Rohres **50.1a.**

Bei der 3. Ausführmgsform der Freilaufvorrichtung **50b** gemäß **Fig.** 32 ist eine weitere **M**aßnahme zur Kostensenkung für die Herstellung des Verteilers **49b** bei Verwendung

- zweier Halbrundnieten **50.3b, 50.5b** und eines Paares Distanzringe **50.6b** unter Einhaltung der Höhendifferenzen "h$_1$" und "h$_2$" durch Einschieben beider Werkzeuge **52, 53** und
- der Restteile der Freilaufvorrichtung **50.**

Nach der Fertigung werden die Werkzeuge herausgezogen.

Bei der 2. und 3. Ausführungsform des Entriegelungsgriffes gemäß **Fig.** 33-36 unterscheiden sich die Lösetasten **91.1, 91.1S** von den Drucktasten **91.2, 91.2S** dadurch, daß die Insassen beim Aussteigen sie immer betätigen. Dies erleichtert den beim Unfall unter Schock stehenden Insassen die Rettung. Vorzugsweise ist das Auslösekabel **91.3** ein Bestandteil des an dem Mitteltmmel **10.5** oder Fahrzeugboden **13** befestigten Gurtstrammers **91.9.** Die Seile **91.10** aller Auslösekabel **91.3** werden zu einem Seil **91.5** durch eine Klammer **91.4** vereint. Über die Umlaufrolle **44** ist es mit dem Schalter **91.6** des Elektromotors **91.7** verbunden.

Bei der 1. bis 3. Ausführungsform des Wamsystems **70, 70a, 70b** gemäß **Fig.** 33 bis 36 wird die Funktion der bereits vorhandenen Fahrzeugteile wie Radio, Wamblinkanlage, Navigationsgerät und Telefon erweitert, um Kosten für das Warnsystem zu sparen. Als visuelles Warnsystem sowohl für Fahrer herannahender Fahrzeuge als auch für Hilfspersonen als auch für Insassen wird die Warnblinkanlage **78** durch die Warnbirnen **4e-4n** und einen sekundären Stromkreis **79.22** ergänzt.

Im nichtgezeichneten Sicherungskasten werden alle Stromkreise durch Sicherungen vor Überlastung geschützt.

An den Hauptstromkreis **79.1 (Fig.** 33) sind ein Nebenstromkreis **79.2,** die primären Stromkreise **79.11-79.14** des Radios **83,** Navigationsgerätes **71,** Telefons **72** und der Warnblinkanlage **78,** die nichtgezeichneten Stromkreise **79.1a-79.1d, 79.1f-79.1h** der Sensoren **84A-84D, 84F-84H**, der Stromkreis **79.1e** sowie andere nichtgezeichnete Stromkreise angeschlossen. Die Warnblinkanlage **78** umfaßt die Warnbirnen **4a-4d** und den Schalter **78.1.** *Um Brand bei Unfällen zu verhindern, wird die Stromversorgung zu der Pumpe des Benzintanks und der Einspritzanlage gekappt. Die Aufgabe der Stromversorgung übernimmt dieser Nebenstromkreis* **79.2,** *woran* die sekundären Stromkreise **79.21-79.26** des Radios **83,** Navigationsgerätes **71,** Telefons **72,** Motors **91.7,** der Warnbirnen **4e-4n** und Warnbinien **4a-4d** der Warnblinkanlage **78** angeschlossen sind. Mit Strom wird er durch mindestens einen Sensor **84A-84H** beim Unfall *und/oder Brand* versorgt. Ob beim Unfall *und/oder Brand* beide Schalter **83.1, 78.1** des Radios **83** und der Wamblinkanlage **78** ein- oder ausgeschaltet sind, wird die in einem Speichermedium **76, 76.1** gespeicherte Textdatei **69** über die Lautsprecher **7a-7n** aufgespielt und werden alle Warnbirnen **4a-4n** zum Blinken gebracht. Dies erleichtert den Insassen und/oder Hilfspersonen das Auffinden der Entriegelungsgriffe und des Unfallfahrzeuges insbesondere in der Dunkelheit sowie die Bedienung der Entriegelungsgriffe. Angeordnet sind die Lautsprecher **7a, 7b** im nichtgezeichneten Armaturenbrett, Lautsprecher **7c, 7d** im nichtgezeichneten Hintertrennwand, Lautsprecher **7e** in den Fahrzeugtüren **8,8S, 7f** in den nichtgezeichneten Kopfstützen, Lautsprecher **7g, 7h** in den Räumen **77L, 77R,** Lautsprecher **7i** am Fahrzeugboden **13** und Lautsprecher **7j** im Kofferraum. Zweifellos können die Lautsprecher eines anderen Gerätes wie Telefons **72, 72a, 72b,** Navigationsgerätes **71, 71a-71b** und/oder nichtgezeichneten Diktiergerätes mitbenutzt werden.

Um ausländische Insassen und Hilfspersonen besser zu verständigen, ist es ratsam, daß die Textdatei **69,** bestehend aus "Position und Bedienung (Ziehen oder Drücken) der Entriegelungsgriffe" und "Weg zu den Nottüren bei *Fahrzeug,* Flugzeug oder Schiff" usw." für die Insassen und Hilfspersonen, in mehreren Sprachen im Speichermedium **76, 76.1-76.2** zu speichern. Die ursprüngliche Textdatei **69** ist erweiterbar und korrigierbar. Dieses Speichermedium kann für den Verkauf fertiggestellt werden. Die Wiederholung der Textdatei **69** läßt sich durch Betätigung eines nichtgezeichneten Schalters oder bei Überschreitung eines Zeitrahmens beenden. Da das Speichermedium **76, 76.2** ein Bestandteil des Navigationsgerätes **71b** und Telefons **72, 72a, 72b** ist, sind die Kosten für die Erweiterung der Speicherkapazität und der Programme äußerst gering. Das platzsparende Speichermedium **76.2** des Telefons **72b** (Mini-Handy) hat ausreichende Speicherkapazität für die Textdatei

Bei der 1. Ausführungsform des Warnsystems **70** gemäß **Fig.** 33, 36 wird der mit Strom im Stromkreis **79.1e** versorgte Sensor **84E** beim Unfall aktiviert. Damit fließt Strom in den Stromkreisen **79.21** bis **79.24** des Radios **83,** Telefons **72,** Navigationsgerätes **71** und der Warnblinkanlage **78.**

Die im Speichermedium **76, 76.1-76.2** gespeicherte Textdatei **69** spielt/spielen das Radio **83** über die Lautsprecher **7a-7n** und/oder das Telefon **72** über den eigenen Lautsprecher auf.

Ob der Schalter **78.1** ein- oder ausgeschaltet ist, werden alle Warnbimen **4a-4n** der Warnblinkanlage **78** mit Strom im Stromkreis **79.22** versorgt. Die herkömmlichen

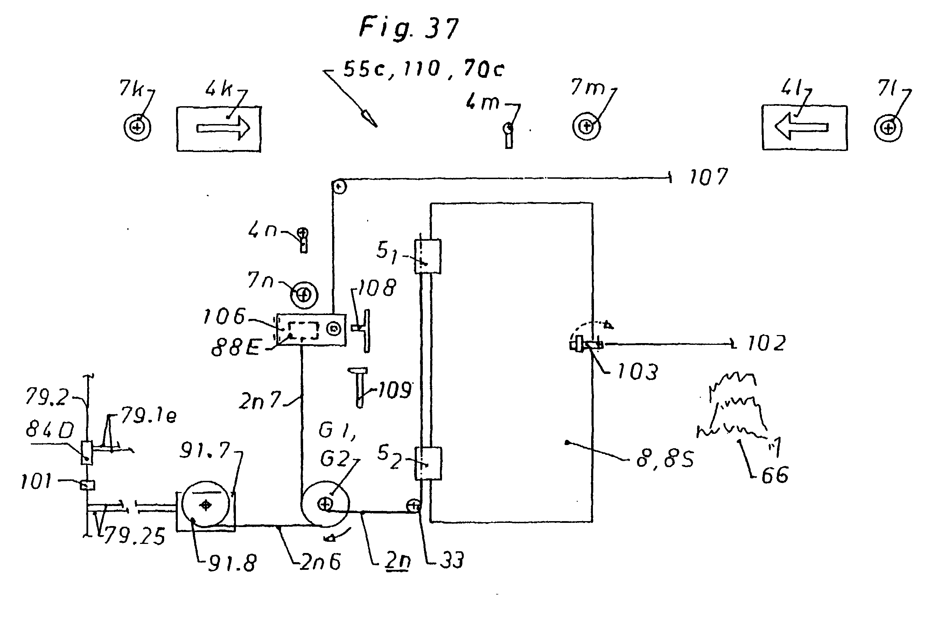

Warnbirnen **4a-4d** sind an den vier äußeren Kanten des Fahrzeuges oder des Transportmittels und die Warnbirnen **4e-4n** neben dem Handbremshebel **86** und den Entriegelungsgriffen **88A-88E** angeordnet **(Fig.** 36, 37).

Bei der 2. Ausführungsform des mit dem Radio 83 ausgestatteten Warnsystem **70a** gemäß **Fig.** 34 ist

- der Stromkreis **79.13a** des Telefons **72a** sowie Stromkreis **79.14a** des Navigationsgerätes **71a** an den Hauptstromkreis **79.1** und
- der Stromkreis **79.23a** des Telefons **72a** an den Nebenstromkreis **79.2** angeschlossen. Um Kosten zu senken, hat das Radio kein Speichermedium. Beim Unfall *wird ein elekromagnetischer* Schalter *72.1a des Telefons* **72a** *aktiviert, um* Datenübertragung *über die* Leitung **71.2a** *zu ermöglichen. Somit empfängt* das Telefon **72a** die Textdatei **69** aus dem Speichermedium **76** des Navigationsgerätes **71a** und spielt über den eigenen Lautsprecher auf Als Alternative kann das Telefon **72a** die Textdatei **69** aus dem eigenen Speichermedium **76.2** über den eigenen Lautsprecher unmittelbar aufspielen.

Bei der 3. Ausführungsform des Wamsystems **70b** gemäß **Fig.** 35 ist der Stromkreis **79.14b** des Navigationsgerätes **71b** an den Hauptstromkreis **79.1** sowie der andere Stromkreis **79.24b** an den Nebenstromkreis **79.2** angeschlossen. Beim Unfall *wird ein elekro-magnetischer* Schatter *72.1b des Navigationsgerätes* **71b** *aktiviert, um* Datenübertragung *zu dem Telefon 72b und Radio 83* über die Leitung **71.3b** *zu ermöglichen. Dadurch wird* die Textdatei **69** aus dem Speichermedium **76** des Navigationsgerätes **71b** über den Lautsprecher *des Telefons 72b* und die Lautsprecher **7a-7n** des Radios **83** aufgespielt.

Bei der 1. Ausführungsform des Rettungssystems **55** gemäß **Fig.** 36 wird ein Seil **2n** aus den Seilen **2, 2S, 2U, 2Y** der Fahrzeugtüren **8, 8S,** Motorhaube **8U,** des Kofferraumdeckels **8Y** unter Zuhilfenahme der zugehörigen Umlenkrollen **34, 34S, 33T, 34Y, 41, 35** und Klammern vereint. Dieses Seil **2n** wird um die Umlaufrolle **9** des Getriebes **G1** gewunden, wobei das Ausgangsseil **2n** der Umlaufrolle **9** als Eingangsseil der Freilaufvorrichtung **50** dient. Von der Klammer **2.9** des Ausgangsseiles **2nn** der Freilaufvorrichtung **50** aus verzweigen sich folgende Seile der Türentriegelungsvorrichtung **15, 15a-15j** des Transportmittels:

- **2n1** des Handbremshebels **86** bei Verwendung der Umlenkrollen **36, 40** und des Lenkers **73;**
- **2n2** des Entriegelungsgriffes **88B** bei Verwendung der Umlenkrollen **36, 42;**
- **2n3** des Entriegelungsgriffes **88C** am Fahrzeugboden;
- **2n4** des Entriegelungsgriffes **88D** bei Verwendung des Lenkers **74** und der Umlenkrolle 43;
- **2n5** des Entriegelungsgriffes **88A** bei Verwendung der Umlenkrollen **37, 42** und
- **2n6** der Lösetasten **91.1** und/oder Drucktasten **91.2S** bei Verwendung der

Umlenkrollen **37, 38, 44** und der vom Motor **91.7** angetriebenen Seilscheibe **91.8.** Ist der Sensor **84A-84H** mit einem herkömmlichen Zeitrelais **101,** der für eine Zeitverzögerung zwischen einem Unfall und Beendigung des Unfallvorganges verantwortlich ist, versehen, so wird der Strom für den Motor **91.7** nach Überschreitung des Zeitverzugs freigegeben. Damit aktiviert der Motor **91.7** ohne die Betätigung des Schalters **91.6** die Türentriegelungsvorrichtung **15, 15a-15j** selbständig.

Bei der 2. Ausführungsform des Rettungssystems **55a** wird die Freilaufvorrichtung **50** durch die Sperrvorrichtung des Getriebes **G1, G2** unter Beibehaltung der Restteile des Rettungssystems **55** ersetzt.

Bedingt durch große Entfernung der Türen **8, 8S** und Nottüren des Schiffes, Busses oder Flugzeuges voneinander sind die selbständigen Türentriegelungsvorrichtungen bei der 3. Ausführungsform des Rettungssystems **55c** ohne Freilaufvorrichtung an den Türen angeordnet (**Fig.** 37). Falls die Leitungen **102** zur Bedienung und/oder zum Öffnen der *Türen* dem Feuer **66** zum Opfer gefallen sind, dann bleiben die Türschlösser **103** der Türen **8, 8S** verriegelt und werden die eingesperrten Insassen Brandopfer (**Fig.** 37). Vermeidbar ist die Tragödie durch eine selbständige Türentriegelungsvorrichtung, die einen Entriegelungsgriff **88E**, das Eingangsseil **2n** der Türscharniere $5_1$ und $5_2$, Getriebe **G2**, den Motor **91.7** mit Seilscheibe **91.8**, die Ausgangsseilen **2n6, 2n7** und eine *Feuerüberwachungsvorrichtung* **110** umfaßt. *Sie* besteht aus dem Temperatur-Sensor **84D** zur Erfassung des Feuers **66** und einem Tachometer (Geschwindigkeitsmesser) **105** (nicht gezeichnet) oder einem Zeitrelais **101**. Steht das Flugzeug oder der Bus oder Zug nach der Beendigung des Unfallvorganges still, gibt der Tachometer **105** in Verbindung mit dem Sensor **84D** Strom frei, wodurch die Seilscheibe **91.8** des Motors **91.7** das Ausgangsseil **2n6** zieht. Anstatt Tachometer **105** kann der Zeitrelais **101** für die Zeitverzögerung verwendet werden. Für Stromversorgung ist Autobatterie **89** oder sind wiederaufladbare Batterien **89a** vorgesehen.

Sind die Stromleitungen **79.1e, 79.2, 79.25** auch dem Feuer **66** zum Opfer gefallen, dann wird der Entriegelungsgriff **88E** bedient. Eine Schutzscheibe **106** schützt den Entriegelungsgriff **88E** vor Mißbrauch. Das Öffnen der Schutzscheibe **106** erfolgt über einen durch Sensor **84D** aktivierten Motor **104** (nicht gezeichnet), ein durch den Kapitän gezogenes Seil **107** oder ein Werkzeug **108** (Steckwerkzeug). Falls es doch nicht funktioniert, dann wird sie in höchster Not durch einen Spitzhammer **109** kaputt geschlagen.

Durch die Warnbirnen **4k-4n** und Lautsprecher **7k-7n** des visuellen und akustischen Warnsystems **70c** werden die Insassen den Weg zur Tür und die Bedienung *der Türentriegelungsvorrichtung* angewiesen.

Diese 3. Ausführung eignet sich ebenso für Züge und Kraftfahrzeuge wie Busse.

### Patentansprüche

1. Rettungssystem für ein Transportmittel, dessen Fahrzeugtüren (**8,8S-8Y**) in dessen Karosserie (**10**) durch eine Aufprallenergie bei einem Unfall festgeklemmt sind oder durch ein Feuer *(66)* verriegelt bleiben, wobei die Fahrzeugtür (**8, 8S-8Y**) mit der Karosserie (**10**) durch mindestens zwei Türscharniere (**5, 5a-5j**) drehbar und/oder verschiebbar verbunden ist, wovon jedes ein an der Fahrzeugtür (**8, 8S-8Y**) befestigtes Scharnierband (**5.2, 5.2a-5.2j**), das andere, an der Karosserie (**10**) befestigte Scharnierband (**5.1, 5.1a-5.1j**) und einen Scharnierbolzen (**6, 6a-6j**) umfaßt;

   **dadurch gekennzeichnet, daß**

   a) der Scharnierbolzen (**6, 6a-6c, 6g-6j**) mit einem Zugglied (**2, $2_o$, 2a, 2b, 2h, 2iu, 2io, 2j, 2g**) verbunden ist; und/oder

   b) das Scharnierband (**5.1a-5.1f**) aus mindestens zwei Scharnierschenkeln (**5.11a-5.11f; 5.12a-5,12f**) besteht, zwischen denen ein Spreizelement (**3a-3f**) angeordnet ist, das mit einem Zugglied (**20a, 20c, 2b-2f**) verbunden ist, über dessen Bewegung das Aufweiten der beiden Scharnierschenkel (**5.11a-5.11f; 5.12a-5.12f**) erfolgt; wobei nach der Beendigung des Unfallvorganges oder beim Brand

   c) ein Herausziehen des Schamierbolzens (**6, 6a-6c, 6g-6j**) aus dem Loch des Türscharniers (**5, 5a-5c, 5g-5j**) und/oder

   d) ein Bruch des Scharnierbandes (**5.1a-5.1f**)

   über ein Ziehen des Zuggliedes (**20a, 20c, 2, $2_o$, 2a-2f, 2h, 2iu, 2io, 2j, 2g**) erfolgt, so daß die zugehörige Fahrzeugtür (**8, 8S-8Y**) von der Karosserie (10) getrennt ist.

2. Rettungssystem nach Anspruch 1, **dadurch gekennzeichnet, daß** der Scharnierbolzen (**6, 6a-6c, 6h-6j**) oder das Spreizelement (**3a-3f**) mit mindestens einem Loch, das mit dem Zugglied (**20a, 20c, 2, $2_o$, 2a-2f, 2h, 2iu, 2io, 2j**), das ein Seil ist, verbunden ist, versehen ist.

3. Rettungssystem nach Anspruch 2, **dadurch gekennzeichnet, daß** durch ein Längsloch des Scharnierbolzens (**6a-6c, 6h-6j**) das Seil (**2a-2c, 2h, 2iu, 2io, 2j**) durchgesteckt ist, dessen Ende mit einer Kugel (**2.2a-2.2c, 2.2h-2.2j**) versehen ist, deren Durchmesser größer als der des Längsloches ist.

4. Rettungssystem nach Anspruch 2 oder 3, **dadurch gekennzeichnet, daß** das *Spreizelement (3a-3f) von den*

EP 1 178 915 B1

*beiden Schamierschenkeln (5.11a-5.11f; 5.12a-5.12f) des Scharnierbandes vorgespannt ist, deren* Aufweiten durch

- eine translatorische Bewegung des Spreizstiftes **(3a-3c),** dessen Endabschnitt **(3.2a-3.2c)** konusförmig ausgebildet ist; oder
- eine rotatorische Bewegung der Spreizscheibe **(3d-3e),** deren Randdicke ($t_i$) zunimmt; oder
- eine rotatorische Bewegung der Spreizscheibe **(3f)**, deren Seite einen Neigungswinkel ($oe_o$) aufweist;

erfolgt.

5. Rettungssystem nach Anspruch 4, **dadurch gekennzeichnet, daß** das Spreizelement **(3b)** einen zylindrischen Teil **(3.1b)**, einen konusförmigen Teil **(3.2b)** und einen zylindrischen Teil **(3.4b)** mit Länge **($L_m$)** umfaßt, wobei der mit dem zylindrischen Teil **(3.1b)** mittels des Seiles **(2b)** mit einem Spiel verbundene Scharnierbolzen **(6b)** um einen Weg **($L_n$),** der < **($L_m$)** ist, *entriegelbar* ist.

6. Rettungssystem nach Anspruch 4, **dadurch gekennzeichnet, daß** die translatorische Bewegung des Spreizelementes **(3a)** durch *eine Berührung seines* Anschlagringes **(3.3a)** mit einem Durchmesser ($d_3$) *mit einer Oberfläche des Scharnierbandes (5.1a)* begrenzt ist.

7. Rettungssystem nach Anspruch 4, **dadurch gekennzeichnet, daß** Sollbruchstellen (s) an *mindestens einer Stirnfläche* des Scharnierbandes **(5.1a-5.1f)** angeordnet sind.

8. Rettungssystem nach Anspruch 1, **dadurch gekennzeichnet, daß** zwei Bolzenteile **(6go, 6gu)** des Scharnierbolzens **(6g)** und ein Paar ineinander verschiebbare, formschlüssig verbundene Fuhrungsrohre **(6.5o, 6.5u)** an zwei Kopplungselementen **(6.1o, 6.1u)** befestigt sind, deren Verbindung erfolgt über

- eine formschlüssige Verbindung *beider* Bolzenteile **(6go, 6gu)** mit *einem Loch eines oberen und unteren Flansches (5.1go, 5.1gu) des Scharnierbandes (5.1g) und beider Führungsrohre (6.5o, 6.5u) mit einem Loch eines oberen und unteren Flansches (5.1go, 5.1gu) des Schamierbandes (5.1g)* und
- eine schwenkbare Verbindung eines Paares oberer Lenker **(6.2o)** und eines Paares unterer Lenker **(6.2u)** mit einem gemeinsamen Gleitschuh **(6.4)**, der mit der im Scharnierband **(5.1g)** durch einen Anschlagring **(2.1g)** begrenzt längsverschiebbaren Zugstange **(2g)** form- und kraftschlüssig verbunden ist;

wobei durch eine Bewegung der Zugstange **(2g)** das Paar obere Lenker **(6.2o)** das obere Kopptungselement **(6.1o)** nach oben und das Paar untere Lenker **(6.2u)** das untere Kopplungselement **(6.1u)** nach unten drückt, so daß das andere Scharnierband **(5.2g)** von den beiden Bolzenteilen **(6go, 6gu)** getrennt ist.

9. Rettungssystem nach Anspruch 8, **dadurch gekennzeichnet, daß** die baugleichen Kopplungselemente **(6.1o, 6.1u),** die baugleichen Bolzenteile **(6go, 6gu)** und die baugleichen Lenker **(6.2o, 6.2u)** Teile des Türscharnieres **(5g)** sind.

10. Rettungssystem nach mindestens einem der Ansprüche 1 bis 3, **dadurch gekennzeichnet, daß** am Schamierband **(5.1h)** ein Paar Stützarme **(5.4h)** um die Achse der Halbrundnieten **(5.5h)** drehbar angeordnet ist, deren Köpfe in Haltelöcher **(5.31h)** eines entlang einem Paar Gleitfläclien **(5.6h)** des Scharnierbandes **(5.1h)** gleitend verschiebbaren Gleithalters **(5.3h)** einrasten, so daß die Stützarme **(5.4h)** gesichert sind und mit den beiden Augen des anderen Scharnierbandes **(5.2h)** formschlüssig verbunden sind.

11. Rettungssystem nach mindestens einem der Ansprüche 1 bis 3, **dadurch gekennzeichnet, daß** *ein Paar* Augen des Scharnierbandes **(5.2i, 5.2j)** mit einem Paar Kreissegmenten **(5.7i, 5.7j)** des anderen Scharnierbandes **(5.1i, 5.1j)** und einem im oder am Scharnierband **(5.1i, 5.1j)** gleitend verschiebbaren Stützarm **(5.4i, 5.4j)** formschlüssig verbunden *ist,* wobei durch ein Stecken eines Haltestiftes **(25i, 25j)** mit einem Rändel **(25.1i, 25.1j)** in das Scharnierband **(5.1i, 5.1j)** und den Stützarm **(5.4i, 5.4j)** der Stützarm **(5.4i, 5.4j)** gesichert ist.

12. Rettungssystem nach mindestens einem der vorgenannten Ansprüche, **dadurch gekennzeichnet, daß** die beiden Scharnierschenkel **(5.11a-5.11f; 5.12a-5.12f)** mittels eines Fangelementes **(1, 1d)** mit einander lose verbunden sind, wobei bei der Türentriegelung das Fangelement **(1, 1d)** die Fahrzeugtür **(8, 8S-8Y)** abfängt.

13. Rettungssystem nach mindestens einem der Ansprüche 4 und 12, **dadurch gekennzeichnet, daß** das *zwischen*

*den beiden Scharnierschenkeln* **(5.11d-5.11f; 5.12d-5.12f)** *befindliche* Spreizelement **(3d-3f)** durch ein Durchstecken und Verschrauben

- eines Haltestiftes **(3.1e, 3.2f)** mit dem Scharnierschenkel **(5.12e, 5.12f)** oder
- des Fangstiftes **(1d)** mit dem Scharnierschenkel **(5.12d)** und einer Mutter **(1.1d)** gesichert ist.

14. Rettungssystem nach Anspruch 13, **dadurch gekennzeichnet, daß** eine Türhalteeinrichtung, die in eine Türentriegelungsvorrichtung eingebunden ist,

- ein Rastelement **(1.2d),** dessen Spannfeder **(1.3d)** an dem Scharnierband **(5.2d)** durch zwei Stifte **(1.4d)** befestigt ist; und
- den Fangstift **(1d)**, dessen nach unten gerichteter Teil **(1.6d)** in eine der Ausnehmungen des durch die Spannfeder **(1.3d)** vorgespannten Rastelementes **(1.2d)** bei einem Türöffnen in einer Position $(O_1)$, $(O_2)$ oder $(O_3)$ einrastet;

umfaßt.

15. Rettungssystem nach mindestens einem der Ansprüche 10, 11 und 14, **dadurch gekennzeichnet, daß** die Türöffnung durch eine Berührung eines Paares Kontaktflächen **(Fb)** des Scharnierbandes **(5.2d, 5.2h-5.2j)** mit

- zwei Anschlagstiften **(5.3d)** des Scharnierbandes **(5.1d); oder
- zwei Kontaktflächen **(Fa)** der Stützarme **(5.4h)** des Scharnierbandes **(5.1h); oder
- einer Kontaktfläche **(Fa)** des Stützarmes **(5.4i, 5.4j)** des Scharnierbandes **(5.1i, 5.1j)** begrenzt ist.

16. Rettungssystem nach mindestens einem der vorgenannten Ansprüche, **dadurch gekennzeichnet, daß** das Scharnierband **(5.1a-5.1f)** mit den beiden Scharnierschenkeln **(5.11a-5.11f; 5.12a-5.12f)** als Strangpreß- oder Stranggußteil hergestellt ist.

17. Rettungssystem nach mindestens einem der vorgenannten Ansprüche, **dadurch gekennzeichnet, daß** die mit den Scharnierschenkeln **(5.11a-5.11f; 5.12a-5.12f)** in einer Berührung gekommenen Flächen des Spreizelementes **(3a-3f)** mit einem Material **(3.5a-3.5f)** zur Geräuschdämpfung und/oder Vorspannung überzogen sind.

18. Rettungssystem nach Anspruch 3, **dadurch gekennzeichnet, daß** ein Schmutzfänger **(2.6)** Sollbruchstellen (s) aufweist und in einer Steckverbindung mit dem Längsloch des Scharnierbolzens **(6a-6j)** an der Stirnfläche ist.

19. Rettungssystem nach mindestens einem der vorgenannten Ansprüche, **dadurch gekennzeichnet, daß** ein Getriebe **(G1)** *ein aus* einem Eingangsseil **(2n)** und Ausgangsseil **(2n)** *bestehendes* Seil **(2n, 2n)** und eine Umlaufrolle **(9)** mit einem Radius (r), um die das Seil **(2n, 2n)** mit einer Windungszahl (i) gewunden ist, umfaßt.

20. Rettungssystem nach mindestens einem der vorgenannten Ansprüche 1 bis 18, **dadurch gekennzeichnet, daß** ein Getriebe **(G2)** ein Eingangsseil **(2n),** Ausgangsseil **(2n)** und eine Umlaufrolle **(9a)** umfaßt, die aus

- einer Umlaufrolle **(9.1a)** mit einem Radius $(r_1)$, in deren Halteloch eine Haltekugel **(2.4)** des Eingangsseiles **(2n)** eingesteckt ist und anschließend um die das Eingangsseil **(2n)** mit einer Windungszahl $(i_1)$ gewunden ist; und
- einer Umlaufrolle **(9.2a)** mit einem Radius $(r_2)$, in deren Halteloch eine Haltekugel **(2.5)** des Ausgangsseiles **(2n)** eingesteckt ist und anschließend um die das Ausgangsseil **(2n)** mit einer Windungszahl $(i_2)$ gewunden ist;

besteht, wobei der Radius $(r_2)$ > der Radius $(r_1)$ ist.

21. Rettungssystem nach Anspruch 19 oder 20, **dadurch gekennzeichnet, daß** eine Seilbewegung in Richtung $(Z_t)$ durch ein Klemmen einer Klammer **(2.3a)** am Eingangsseil **(2n)** vor einem Loch *eines* Karosserieteiles **(10.2)** und durch ein Klemmen einer Klammer **(2.3b)** am Ausgangsseil **(2n)** vor einem Loch *eines* Karosserieteiles **(10.3)** vermieden ist.

22. Rettungssystem nach mindestens einem der Ansprüche 19 bis 21, **dadurch gekennzeichnet, daß** eine Spemorrichtung des Getriebes **(G1, G2)** ein Außenrohr **(11.1)** und eine im Außenrohr **(11.1)** längsverschiebbare Sperrwelle **(11)** umfaßt, wobei die Sperrwelle **(11)** in ein Sperrloch an einer Stirnfläche der Umlaufrolle **(9, 9.1a, 9.2a)** zur Sperrung eingesteckt ist und aus dem Sperrloch zur Freigabe herausnehmbar ist.

23. Rettungssystem nach mindestens einem der vorgenannten Ansprüche, **dadurch gekennzeichnet, daß** das Seil **(2n, 2n, 2iu, 2io, 2d-2f, 2n1-2nn)**

    - mit einem Schlauch **(9.8)** überzogen ist; und/oder
    - durch mindestens eine Umlenkrolle **(30-44)** umgelenkt ist,

24. Rettungssystem nach Anspruch 1, **dadurch gekennzeichnet, daß** eine Freilaufvorrichtung **(50, 50a-50b)**

    - einen Verteiler **(49, 49a-49b)** mit *einem* um eine Welle **(50.7, 50.7a)** umschlungenen Eingangsseil **(2n)** und *einem* um zwei Wellen **(50.3, 50.5; 50.3a, 50.5a)** umschlungenen Ausgangsseil **(2nn),** das und andere Ausgangsseilen **(2n1-2nm)** durch eine Klammer **(2.9)** zusammengeklemmt sind, wobei alle Ausgangsseile **(2n1-2nn)** mit Entriegelungsgriffen **(86, 88A-88D, 91.1, 91.2S)** einer Türentriegelungsvorrichtung **(15, 15a-15j)** des Transportmittels verbunden sind;
    - ein Sperrgehäuse **(51, 51a-51b),** durch dessen Kopplung mit dem Verteiler **(49, 49a-49b)** die Freilaufvorrichtung **(50, 50a-50b)** in einem *Zustand des Freilaufes* ist;
    - eine Klammer **(2.7, 2.8),** die am um die Welle **(50.7, 50.7a)** umschlungenen Eingangsseil **(2n)** zum Verhindern der Seilbewegung in Richtung $(Z_t)$ befestigt ist; und
    - einen Motor **(51.5)**

    umfaßt.

25. Rettungssystem nach Anspruch 24, **dadurch gekennzeichnet, daß** der Verteiler **(49, 49a)**

    - ein Paar Blattfedern **(50.2),** deren Endabschnitte **(50.2u, 50.2x)** abgerundet sind, wovon jeder ein Loch und zwei Längslöcher **(50.2v, 50.2w)** aufweist;
    - ein Rohr **(50.1, 50.1a),** entlang dessen Paar Längslöchern **(50.13)** *drei Wellen* **(50.3, 50.5, 50.7 oder 50.7a)** in Längsrichtung verschiebbar sind;
    - die Welle **(50.7, 50.7a),** deren Endabschnitte über die Längslöcher **(50.13)** des Rohres **(50.1, 50.1a)** ragen und durch zwei Sicherungsringe **(50.8)** gesichert sind;
    - die Welle **(50.5),** deren Endabschnitte über die Längslöcher **(50.13)** des Rohres **(50.1, 50.1a)** und die Löcher beider Blattfedern **(50.2)** ragen und durch ein Paar Distanzringe **(50.14),** ein Paar große Unterlegscheiben **(50.12)** und ein Paar Sicherungsringe **(50.6)** gesichert sind;
    - die Welle **(50.3),** deren Endabschnitte über die Längslöcher **(50.13)** des Rohres **(50.1, 50.1a)** und die Längslöcher **(50.2w)** beider Blattfedern **(50.2)** ragen und durch ein Paar Sicherungsringe **(50.4)** gesichert sind; und
    - eine am Rohr **(50.1, 50.1a)** befestigte Welle **(50.9, 50.9a)** zu einer drehbaren Lagerung des Sperrgehäuses **(51, 51a)** und zu einer Aufnahme eines Paares Federn **(50.11),** die die Welle **(50.7, 50.7a)** vorspannen;

    umfäßt, *wobei die Veränderung des Zustandes des Freilaufes der Freilaufvorrichtung (50, 50a-50b) in einen Sperrzustand erfolgt über ein Einrasten der Endabschnitte der Welle (50.7, 50.7a) in die Längslöcher (50.2v) beider Blattfedern (50.2) infolge einer Entkopplung des Sperrgehänses (51, 51a-51b) von dem Verteiler (49, 49a-49b) bei einer Drehung des beim Unfall aktivierten Motors (51.5) bis zum Drehwinkel $(\beta_1)$.*

26. Rettungssystem nach mindestens einem der Ansprüche 24 und 25, **dadurch gekennzeichnet, daß** das Sperrgehäuse **(51)**

    - ein Paar mit Steuerkanten **(51.2x-51.2z)** versehene Steuerplatten **(51.2),** deren kreisförmige Haltesegmente **(51.2u)** vom Rohr **(50.1)** im *Zustand des Freilaufes* der Freilaufvorrichtung **(50, 50b)** formschlüssig gehalten sind; und
    - einen U-förmigen Bügel **(51.1),** der mit den Steuerplatten **(51.2)** durch vier Nieten **(51.3)** steckbar und kraftschlüssig verbunden ist;

    umfaßt.

27. Rettungssystem nach mindestens einem der Ansprüche 24 und 25, **dadurch gekennzeichnet, daß** das Sperrgehäuse **(51a)**

- das Paar mit Steuerkanten **(51.2x-51.2z)** versehene Steuerplatten **(51.2a); und**
- den U-förmigen Bügel **(51.1a),** der in Steckverbindung und in kraftschlüssiger Verbindung mit den Steuerplatten **(51.2a)** durch ein Paar Senknieten **(51.16a)** und ein Paar Halbrundnieten **(51.3a)** ist, deren *Halteköpfe* **(51.3au)** mit *Löchern* des Rohres **(50.1a)** im *Zustand des Freilaufes* der Freilaufvorrichtung **(50a)** steckbar verbunden sind;

umfaßt.

28. Rettungssystem nach Anspruch 27, **dadurch gekennzeichnet, daß** der Verteiler **(49b)** aus zwei Halbrundnieten **(50.3b, 50.5b),** einem Paar Distanzringen **(50.6b),** deren Höhendifferenzen ($h_1$, $h_2$) durch ein Einschieben zweier Werkzeuge **(52, 53)** ausgeglichen sind, und den Restteilen des Verteilers **(49, 49a)** hergestellt ist, wobei nach der Fertigung die Werkzeuge **(52, 53)** herausgezogen sind.

29. Rettungssystem nach mindestens einem der vorgenannten Ansprüche, **dadurch gekennzeichnet, daß** das gemeinsame Seil **(2)** der Türentriegelungsvorrichtung **(15)** der Fahrzeugtür **(8)** mit *einem* zweiten Loch des Scharnierbolzens **(6)** des unteren Türscharniers **(5)** verbunden ist, dessen erstes Loch mit *einem* Loch des Scharnierbolzens **(6o)** des oberen Türscharniers **(5)** mittels des Seiles **(2o)** verbunden ist.

30. Rettungssystem nach mindestens einem der Ansprüche 1 bis 28, **dadurch gekennzeichnet, daß** die Türentriegelungsvorrichtung **(15i)** der Fahrzeugtür **(8i)** aus

- den Türscharnieren **(5i);**
- den durch die Längslöcher der beiden Scharnierbolzen **(6i)** gesteckten Seilen **(2iu, 2io),** wovon jedes Seil **(2iu, 2io),** ein Seil **(21i)** des Haltestiftes **(25i)** und ein durch eine Umlaufrolle **(30)** umgelenktes Seil **(20i)** des Stützarmes **(5.4i)** zu dem Seil **(2iu, 2io)** mittels *zwei Klammern* **(2.1i)** zusammengefaßt sind;
- einer Doppelumlaufrolle **(32),** wodurch die beiden Seile **(2iu, 2io)** mit Windungszahlen ($i_a$) *und* ($i_b$) umgelenkt und zu einem Seil **(2)** mittels einer Klammer **(2.3i)** vereint sind; und
- einer Umlaufrolle **(33),** wodurch das Seil **(2)** mit einer Windungszahl ($i_c$) zu einem gemeinsamen Seil **(2)** umgelenkt ist;

gebildet ist.

31. Rettungssystem nach Anspruch 29 oder 30, **dadurch gekennzeichnet, daß** das gemeinsame Seil **(2, 2S-2Y)** der Türentriegelungsvorrichtung **(15, 15a-15j)** der Fahrzeugtür **(8, 8S-8Y)** mit Sollbruchstellen versehen ist, die von allen Fahrzeugtüren **(8, 8S-8Y)** des Transportmittels bei den Unfällen die höchste Rate unter den festgeklemmten Fahrzeugtüren **(8, 8S-8Y)** aufweist.

32. Rettungssystem nach Anspruch 1, **dadurch gekennzeichnet, daß** ein Getriebe **(G3)** mit einem um die $z_2$-Achse drehbaren Lenker **(73, 74)** versehen ist, der

- ein Rohr **(73.1),** an dessen erstem Ende ein Gewindestift **(73.2)** und an dessen zweitem Ende eine Augensdiraube **(73.4)** befestigt ist, wonach ein Ring **(86.6)** eines Seiles **(2n1, 2n4)** entlang dem Gewindestift **(73.2)** und ein Ring **(86.7)** eines Seiles **(86.2, 88.2)** entlang der Angenschraube **(73.4)** zur Einstellung des Überschungsverhältnisses bewegt wird; und
- zwei Paer Muttern **(73.4)** zur Sicherung der beiden Ringe **(86.6, 86.7)** umfaßt.

33. Rettwigssystem nach Anspruch 32, **dadurch gekennzeichnet, daß** ein Hilfsseil **(86.2)** des Lenkers **(73)** an einem Bremsseil **(86.3)** eines Handbremshebels **(86)** durch eine Klammer **(86.4)** befestigt ist, wobei nach der Beendigung des Unfallvorganges oder beim Brand ein Handbremsen und eine Türentriegelung über ein Hochziehen des Handbremshebels **(86)** erfolgen.

34. Rettungssystem nach Anspruch 1, **dadurch gekennzeichnet, daß** als Entriegelungsgriffe *Lösetasten* **(91.1, 91.1S)** *oder* Drucktasten **(91.2, 91.2S)** der Gurtschlösser **(91, 91S)** mit Auslösekabeln **(91.3),** deren Seile **(91.10)** zu einem Seil **(91.5)** durch eine Klammer **(91.4)** vereint sind, versehen sind, wobei das Seil **(91.5)** durch eine Umlaufrolle **(44)** umgelenkt ist und mit einem Schalter **(91.6)** eines Motors **(91.7)** verbunden ist.

35. Rettungssystem nach mindestens einem der vorgenannten Ansprüche, **dadurch gekennzeichnet, daß** die Türentriegelungsvorrichtung **(15,15a-15j)** eines Rettungssystems **(55)**

- das Getriebe **(G1, G2),** dessen Eingangsseil **(2n)** aus den durch die zugehörigen Umleukrollen **(34, 34S, 33T, 34Y, 41, 35)** umgelenkten und durch die zugehörigen Klammern zusammengehaltenen Seilen **(2, 2S-2Y)** der Türentriegelungsvorrichtungen **(15, 15a-15j)** der Fahrzeugtüren **(8, 8S-8Y)** gebildet ist und dessen Ausgangsseil **(2n)** als das Eingangsseil der Freilaufvorrichtung **(50, 50a-50b)** dient; und
- die Fredaufvorrichtung **(50, 50a-50b),** dessen Ausgangsseile **(2n1-2n6)** durch die zugehörigen Umlenkrollen **(36-38, 40, 42-44),** Lenker **(73, 74)** und eine vom Motor **(91.7)** angetriebene Seilscheibe **(91.8)** mit dem Handbremshebel **(86),** den Löse- *oder* Drucktasten **(91.1, 91.1S** *oder* **91.2, 91.2S),** dem Entriegelungsgriff **(88D)** des Kofferraumdeckels **(8Y),** *dem* am Fahrzeugboden **(13)** angeordneten Entriegelungsgriff **(88C)** und den in fahrzeugseitigen Räumen **(77L, 77R)** mit zwei Tankdeckeln **(87.2)** angeordneten Entriegelungsgriffen **(88A, 88B)** verbunden sind;

umfaßt.

36. Rettungssystem nach mindestens einem der Ansprüche 1 bis 34, **dadurch gekennzeichnet, daß** die Türentriegelungsvorrichtung **(15, 15a-15j)** eines Rettungssystems **(55a)**

- das Getriebe **(G1, G2),** dessen Eingangsseil **(2n)** aus den durch die zugehörigen Umlenkrollen **(34, 34S, 33T, 34Y, 41, 35)** umgelenkten und durch die zugehörigen Klammem zusammengehaltenen Seilen **(2, 2S-2Y)** der Türentriegelungsvorrichtungen **(15, 15a-15j)** der Fahrzeugtüren **(8, 8S-8Y)** gebildet ist und dessen Ausgangsseil **(2n1-2n6)** durch die zugehörigen Umlenkrollen **(36-38, 40, 42-44),** Lenker **(73, 74)** und eine vom Motor **(91.7)** angetriebene Seilscheibe **(91.8)** mit dem Handbremshebel **(86),** den Löse- *oder* Drucktasten **(91.1, 91.1S** *oder* **91.2, 91.2S),** dem Entriegetungsgriff **(88D)** des Kofferraumdeckels **(8Y),** *dem* am Fahrzeugboden **(13)** angeordneten Entriegelungsgriff **(88C)** und den in fahrzeugseitigen Räumen **(77L, 77R)** mit zwei Tankdeckeln **(87.2)** angeordneten Entriegelungsgriffen **(88A, 88B)** verbunden sind; und
- die Sperrvorrichtung des Getriebes **(G1, G2)**

umfaßt.

37. Rettungssystem nach mindestens einem der Anspruche 1 bis 34, **dadurch gekennzeichnet, daß** ein Rettungssystems **(55c)** aus einer Anzahl von selbständigen Türentriegelungsvorrichtungen **(15, 15a-15j)** der Fahrzeugtüren **(8, 8S-8Y)** besteht, wovon jede

- das Getriebe **(G1, G2)**. dessen Eingangsseil **(2n)** über die zugehörige Umlenkrolle **(33, 33S)** mit den Türscharnieren **(5, 5a-5j)** der Fahrzeugtür **(8, 8S-8Y)** verbunden ist und das mit zwei Ausgangsseilen **(2n6, 2n7)** versehen ist;
- eine vom Motor **(91.7)** angetriebene Seilscheibe **(91.8),** die mit dem Ausgangsseil **(2n6)** verbunden ist; und
- einen neben der Fahrzeugtür **(8, 8S-8Y)** angeordneten Entriegelungsgriff **(88E)**, der mit dem Ausgangssed **(2n7)** verbunden ist und von einer Schutzscheibe **(106)** vor Mißbrauch geschützt ist;

umfaßt.

38. Rettungssystem nach Anspruch 37, **dadurch gekennzeichnet, daß** das Öffnen der Schutzscheibe (106) über

- einen durch einen Sensor **(84D)** aktivierten Motor **(104)** oder
- ein Ziehen eines Seiles **(107)** oder
- eine Verwendung eines Werkzeuges **(108, 109)**

erfolgt.

39. Rettungssystem nach mindestens einem der Ansprüche 35 bis 38, **dadurch gekennzeichnet, daß** das Rettungssystem **(55, 55a, 55c)** mit einem visuellen und/oder akustischen Warnsystem **(70, 70a, 70e)** ausgerüstet ist.

40. Rettungssystem nach Anspruch 39, **dadurch gekennzeichnet, daß** das Rettungssystem **(55, 55a, 55c)** von mindestens einem Sensor **(84A-84H)** ausgerüstet ist.

41. Rettungssystem nach Anspruch 40, **dadurch gekennzeichnet, daß** ein 3-D Sensor für das Rettungssystem **(55, 55a, 55c)** vorgesehen ist.

**42.** Rettungssystem nach Anspruch 40, **dadurch gekennzeichnet, daß** der Sensor **(84D)** für die Erfassung des Feuers **(66)** im Transportmittel vorgesehen ist.

**43.** Rettungssystem nach mindestens einem der Ansprüche 40 bis 42, **dadurch gekennzeichnet, daß** eine Warnblinkanlage **(78)** des Transportmittels beim Unfall und/oder Brand automatisch eingeschaltet ist *und Warnbirnen (4a-4d)* blinken.

**44.** Rettungssystem nach Anspruch 43, **dadurch gekennzeichnet, daß** *Warnbirnen* **(4e-4n)** der Warnblinkanlage **(78)** neben dem Handbremshebel **(86)** und den Entriegelungsgriffen **(88A-88E)** angeordnet sind.

**45.** Rettungssystem nach mindestens einem der Ansprüche 37 bis 44, **dadurch gekennzeichnet, daß** das Warnsystem **(70, 70a-70c)**

- ein Navigationsgerät **(71, 71a, 71b);**
- ein Radio **(83)** mit *Lautsprechern* **(7a-7n);**
- eine Textdatei **(69);**
- ein Telefon **(72, 72a, 72b)** mit einem Lautsprecher und/oder
- die Warnblinkanlage **(78)** mit den Warnbirnen **(4a-4n)**

umfaßt.

**46.** Rettungssystem nach Anspruch 45, **dadurch gekennzeichnet, daß** an eine Batterie **(89)** ein Hauptstromkreis **(79.1)** angeschlossen ist, woran *primäre* Stromkreise **(79.11-79.14)** der Warnsystemteile **(71, 71a, 71b, 72, 72a, 72b, 78, 83),** Stromkreise **(79.1a-79.1d, 79.1f-79.1h)** der Sensoren **(84A-84H)** und *ein* Nebenstromkreis **(79.2)** angeschlossen sind, wobei

- an den Nebenstromkreis **(79.2)** sekundäre Stromkreise **(79.21-79.26)** der Warnsystemteile **(71, 71a, 71b, 72, 72a, 72b, 78, 83)** und des Motors **(91.7)** angeschlossen sind und
- beim Unfall und/oder Brand die Warnsystemteile **(71, 71a, 71b, 72, 72a, 72b, 78, 83)** und den Motor **(91.7)** mit dem Strom aus dem Nebenstromkreis **(79.2)** versorgt sind.

**47.** Rettungssystem nach Anspruch 45, **dadurch gekennzeichnet, daß** an eine Batterie **(89)** ein Hauptstromkreis **(79.1)** angeschlossen ist, *woran primäre* Stromkreise **(79.11-79.14)** der Warnsystemteile **(71, 71a, 71b, 72, 72a, 72b, 78, 83),** Stromkreise **(79.1a-79.1d, 79.1f-79.1h)** der Sensoren **(84A-84H)** und *ein* Nebenstromkreis **(79.2)** angeschlossen sind, wobei

- an den Nebenstromkreis **(79.2)** wiederaufladbare Batterien **89a,** sekundäre Stromkreise **(79.21-79.26)** der Warnsystemteile **(71, 71a, 71b, 72, 72a, 72b, 78, 83)** und des Motors **(91.7)** angeschlossen sind und
- beim Unfall und/oder Brand die Stromversorgung des Hauptstromkreises **(79.1)** unterbrochen ist und die wiederaufladbaren Batterien **(89a)** die Stromversorgung für den Motor **(91.7)** und die Warnsystemteile **(71, 71a, 71b, 72, 72a, 72b, 78, 83)** übernehmen.

**48.** Rettungssystem nach Anspruch 45, **dadurch gekennzeichnet, daß** die Textdatei **(69)** in einem Speichermedium **(76, 76.1-76.2)** des Navigationsgerätes **(71, 71a, 71b),** Radios **(83)** oder Telefons **(72a, 72b)** gespeichert ist.

**49.** Rettungssystem nach Anspruch 48, **dadurch gekennzeichnet, daß** die Textdatei **(69)** in mehreren Sprachen verfaßt ist.

**50.** Rettungssystem nach mindestens einem der Ansprüche 48 bis 49, **dadurch gekennzeichnet, daß** beim Unfall und/oder Brand die im Speichermedium **(76.1)** des Radios **(83)** gespeicherte Textdatei **(69)** über die Lautsprecher **(7a-7n)** beim Unfall aufgespielt ist.

**51.** Rettungssystem nach mindestens einem der Ansprüche 48 bis 49, **dadurch gekennzeichnet, daß** beim Unfall und/oder Brand die im Speichermedium **(76, 76.2)** des Navigationsgerätes **(71, 71a, 71b)** oder Telefons **(72a, 72b)** gespeicherte Textdatei **(69)** dem Radio **(83)** übertragen ist und über die Lautsprecher **(7a-7n)** des Radios **(83)** und/oder den Lautsprecher des Telefons **(72a, 72b)** aufgespielt ist.

**52.** Rettungssystem nach mindestens einem der vorgenannten Ansprüche, **dadurch gekennzeichnet, daß** der Sen-

**EP 1 178 915 B1**

sor **(84A-84H),** *der* den Unfall und/oder das Feuer erfaßt, nach der Beendigung des Unfallvorganges, der Fahrt oder Landung und/oder beim Brand Strom dem Motor **(91.7)** freigibt, der die Türentriegelungsvorrichtung **(15,15a-15j)** *zur Trennung* der Fahrzeugtüren **(8, 8S-8Y)** des Transportmittels von der Karosserie **(10)** antreibt.

**Claims**

1. A rescue system for a transport system, vehicle doors **(8, 8S to 8Y)** of which are jammed in a vehicle body **(10)** of which by impact energy in an accident or remain locked due to fire **(66),** where the vehicle door **(8, 8S to 8Y)** is rotatably and/or movably connected to the **v**ehicle body **(10)** by at least two hinges **(5, 5a to 5j)**, each of which comprises a hinge member **(5.2, 5.2a to 5.2j)**, fastened to the vehicle door **(8, 8S to 8Y)**, the other hinge member **(5.1, 5.1a to 5.1j)**, fastened to the vehicle body **(10),** and a hinge pin **(6, 6a to 6j); characterised in that**

    a) the hinge pin **(6, 6a to 6c, 6g to 6j)** is connected to a tie member **(2, 2$_o$, 2a, 2b, 2h, 2iu, 2io, 2j, 2g);** and/or
    b) the hinge member **(5.1a to 5.1f)** consists of at least two hinge legs **(5.11a to 5.11f; 5.12a to 5.12f)**, between which an expanding element **(3d to 3f)** is arranged and connected to a tie member **(20a, 20c, 2b to 2f),** a movement of which expands both hinge legs **(5.11a to 5.11f; 5.12a to 5.12f)**;
    where after the accident is over or in the event of the fire the corresponding vehicle door **(8, 8S to 8Y)** is detached from the vehicle body **(10)** when the tie member **(20a, 20c, 2, 2$_o$, 2a to 2f, 2h, 2iu, 2io, 2j, 2g)** is pulled thus resulting in
    c) removal of the hinge pin **(6, 6a to 6c, 6g to 6j)** from the hole of the hinge **(5, 5a to 5c, 5g to 5j)** and/or
    d) fracture of the hinge member **(5.1a to 5.1f)**.

2. A rescue system according to claim 1, **characterised in that** the hinge pin **(6, 6a to 6c, 6g to 6j)** or the expanding element **(3d to 3f)** is provided with a hole, connected to the tie member **(20a, 20c, 2, 2$_o$, 2a to 2f, 2h, 2iu, 2io, 2j, 2g),** which is a wire.

3. A rescue system according to claim 2, **characterised in that** through a longitudinal hole of the hinge pin **(6, 6a to 6c, 6g to 6j)** the wire **(2a to 2c, 2h, 2iu, 2io, 2j)** is projected, the end portion of which is provided with a ball **(2.2a to 2.2c, 2.2h to 2.2j)** having a diameter larger than that of the longitudinal hole.

4. A rescue system according to claim 2 or 3, **characterised in that** the expanding element **(3d to 3f)** is biased by both hinge legs **(5.11a to 5.11f; 5.12a to 5.12f)** ofthe hinge member **(5.1a to 5.1f)**, which are expanded by

    - a conical-shaped portion **(3.2a to 3.2c)** of the expanding pin **(3a to 3c)** upon translatory movement; or
    - a rim of the expanding wheel **(3d** to **3e),** having an increasing thickness ($t_i$), upon rotatory movement; or
    - the expanding wheel **(3f),** having a side with slope angle ($oe_o$), upon rotatory movement.

5. A rescue system according to claim 4, **characterised in that** the expanding element **(3b)** consists of a cylindrical member **(3.1b)**, a conical member **(3.2b)** and a cylindrical member **(3.4b),** having a length of ($L_m$), where the detachable hinge pin **(6),** tautly connected to the cylindrical member **(3.1b)** by the wire **(2b),** is detachable about a length of ($L_n$) smaller than ($L_m$).

6. A rescue system according to claim 4, **characterised in that** the translatory movement of the expanding pin **(3a)** is blocked when its stop ring **(3.3a)** with a diameter ($d_3$) comes to a contact with a surface of the hinge member **(5.1a).**

7. A rescue system according to claim 4, **characterised in that** sites of predetermined fracture (s) are arranged on at least one front surface of the hinge member **(5.1a to 5.1f)**, facing each other.

8. A rescue system according to claim 1, **characterised in that** two pin-members **(6go, 6gu)** of the hinge pin **(6g)** are force-locking connected to a pair of guide tubes **(6.5o, 6.5u)**, each of which telescopes into the other, by two coupling members **(6.1o, 6.1u)**, which are connected to each other by

    - a form-locking connection of the pin-members **(6go, 6gu)** with an upper and lower hole of flanges **(5.1go, 5.1gu)** of the hinge member **(5.1g)** and of the tubes **(6.5o, 6.5u)** with an upper and lower hole of flanges **(5.1go. 5.1gu)** thereof and
    - a rotatable connection of a pair of upper swinging arms **(6.2o)** and of lower swinging arms **(6.2u)** with a common

22

slide shoe **(6.4),** form- and force-locking connected to the tie member **(2g),** which is a tie rod, and the longitudinal movement of which is limited by a stop ring **(2.1g);**

where the hinge member **(5.2g)** is detached from both pin-members **(6go, 6gu)** in response to the movement of the tie rod **(2g)** which pushes the pair of upper swinging arms **(6.2o)** upwardly and the pair of lower swinging arms **(6.2u)** downwardly.

9. A rescue system according to claim 8, **characterised in that** the similar coupling members **(6.1o, 6.1u),** the similar pin-members **(6go, 6gu)** and the similar swinging arms **(6.2o, 6.2u)** are parts of the hinge **(5g).**

10. A rescue system according to at least one of claims 1 to 3, **characterised in that** a pair of supporting arms **(5.4h)** is rotatably arranged to the hinge member **(5.1h)** about the axis of round head rivets **(5.5h),** snapping into the retaining holes **(5.31h)** of the slide retainer **(5.3h),** sliding along a pair of sliding surfaces **(5.6h)** of the hinge member **(5.1h)** to secure the supporting arms **(5.4h),** form-locking connected to both eyes of the other hinge member **(5.2h)**.

11. A rescue system according to at least one of claims 1 to 3, **characterised in that** a pair of eyes of the hinge member **(5.2i, 5.2j)** is in form-locking connection with a pair of circular segments **(5.7i, 5.7j)** of the other hinge member **(5.1i, 5.1j)** and a supporting arm **(5.4i, 5.4j),** sliding in or on the hinge member **(5.1i, 5.1j),** where the supporting arm **(5.4i, 5.4j)** is secured by a retaining pin **(25i, 25j)** with knurled head **(25.1i, 25.1j),** inserted into the other hinge member **(5.1i, 5.1j)** and the supporting arm **(5.4i, 5.4j).**

12. A rescue system according to at least one of preceding claims, **characterised in that** a catch element **(1, 1d)** loosely connects both hinge legs **(5.11a to 5.11f; 5.12a to 5.12f)** to prevent the vehicle door **(8, 8S to 8Y),** when detached, from flying off.

13. A rescue system according to at least one of claims 4 and 12, **characterised in that** the expanding element **(3d to 3f),** located between both hinge legs **(5.11d to 5.11f; 5.12d to 5.12f),** is secured by projecting

    - a retaining pin **(3.1e, 3.2f)** therein and bolting it to the hinge leg **(5.12e, 5.12f)** or
    - the catch pin **(1d)** therein and bolting it to the hinge leg **(5.12d)** and a nut **(1.1d).**

14. A rescue system according to claim 13, **characterised in that** a doorstop, which is integrated in a door-detachment device, comprises

    - a doorstop retainer **(1.2d),** a tension spring **(1.3d)** of which is fastened to the hinge member **(5.2d)** by two pins **(1.4d)**; and
    - the catch pin **(1d),** a downward-directed portion **(1.6d)** of which engages in one ofthe cut-outs of the doorstop retainer **(1.2d),** biased by the tension spring **(1.3d),** when the opened door is positioned in $(O_1)$, $(O_2)$ or $(O_3)$.

15. A rescue system according to at least one of claims 10, 11 and 14, **characterised in that** the range of door-opening is limited by the contact of a pair of contact surfaces **(Fb)** of the hinge member **(5.2d, 5.2h to 5.2j)** with

    - two stop pins **(5.3d)** of the hinge member **(5.1d)**; or
    - two contact surfaces **(Fa)** of the supporting arms **(5.4h)** of the hinge member **(5.1h)**; or
    - the contact surface **(Fa)** of the supporting arm **(5.4i, 5.4j)** of the hinge member **(5.1i, 5.1j)**.

16. A rescue system according to at least one of preceding claims, **characterised in that** the hinge member **(5.1a to 5.1f)** having two hinge legs **(5.11a to 5.11f; 5.12a to 5.12f)** is made of a component by extrusion, depth extrusion or casting.

17. A rescue system according to at least one of preceding claims, **characterised in that** the surfaces of the expanding element **(3a to 3f),** in contact with both hinge legs **(5.11a to 5.11f; 5.12a to 5.12f),** are surrounded with a material **(3.5a to 3.5f)** to silence noises and/or to bias.

18. A rescue system according to claim 3, **characterised in that** a dirt guard **(2.6),** provided with sites of predetermined fracture (s), is in plug-in connection with the longitudinal hole of the hinge pin **(6a to 6j)** on the front surface.

19. A rescue system according to at least one of preceding claims, **characterised in that** a gear **(G1)** comprises a wire **(2n, 2n),** consisting of an entrance wire **(2n)** and an exit wire **(2n),** and a deflecting pulley **(9)** with radius (r), about which the wire **(2n, 2n)** is wound about a number of turns (i).

20. A rescue system according to at least one of claims 1 to 18, **characterised in that** a gear **(G2)** comprises an entrance wire **(2n),** an exit wire **(2n)** and a deflecting pulley **(9a),** consisting of

    - a deflecting pulley **(9.1a)** with small radius ($r_1$), into a retaining hole of which a retaining ball **(2.4)** of the entrance wire **(2n)** is projected and, finally, about which the entrance wire **(2n)** is wound a number of turns ($i_1$); and
    - a deflecting pulley **(9.2a)** with big radius ($r_2$) larger than ($r_1$), into a retaining hole of which a retaining ball **(2.5)** of the exit wire **(2n)** is projected and, finally, about which the exit wire **(2n)** is wound a number of turns ($i_2$).

21. A rescue system according to claim 19 or 20, **characterised in that** a movement of the wire in direction ($Z_t$) is prevented by a bracket **(2.3a),** clamped around the entrance wire **(2n)**, in front of a hole of a member **(10.2)** of the vehicle body, and by a bracket **(2.3b),** clamped around the exit wire **(2n),** in front of a hole of a member **(10.3)** thereof.

22. A rescue system according to at least one of claims 19 to 21, **characterised in that** a latch device of the gear **(G1, G2)** comprises an outer tube **(11.1)** and a blocking shaft **(11),** movable therein, which is inserted into a hole on a front surface of the deflecting pulley **(9, 9.1a, 9.2a)** to block the gear **(G1, G2)** and removable therefrom to release it.

23. A rescue system according to at least one of preceding claims **characterised in that** the wire **(2n, 2n, 2iu, 2io, 2d to 2f, 2n1 to 2nn)** is

    - surrounded with a hose **(9.8)**; and/or
    - deflected by at least one pivot **(30 to 44)**.

24. A rescue system according to claim 1, **characterised in that** a freewheeling device **(50, 50a to 50b)** comprises

    - a distributor **(49, 49a to 49b)** having an entrance wire **(2n),** wound around a shaft **(50.7, 50.7a),** and a main exit wire **(2nn),** wound around two shafts **(50.3, 50.5; 50.3a, 50.Sa),** which and complementary exit wires **(2n1 to 2nm),** clamped together by a bracket **(2.9),** are connected to door-release levers **(86, 88A to 88D, 91.1, 91.2S)** of a door-detachment device **(15, 15a to 15j)** of the transport system;
    - a coupling casing **(51, 51a to 51b),** when coupling with the distributor **(49, 49a to 49b)** the freewheeling device **(50, 50a to 50b)** is in the state of non-lock;
    - a bracket **(2.7, 2.8),** fastened to the wire **(2n)**, being wound around the shaft **(50.7, 50.7a),** to prevent the movement of the wire in direction ($Z_t$); and
    - a motor **(51.5).**

25. A rescue system according to claim 24, **characterised in that** the distributor **(49, 49a)** comprises

    - a pair of leaf springs **(50.2),** each of which has round end portions **(50.2u, 50.2x),** a hole and two oblong holes **(50.2v, 50.2w);**
    - a tube **(50.1, 50.1a)**, having a pair of oblong holes **(50.13)**, along which three shafts **(50.3, 50.5, 50.7 or 50.7a)** are movable in the longitudinal direction;
    - the shaft **(50.7, 50.7a),** the end portions of which, protruding through the tube **(50.1, 50.1a),** are secured by two retaining rings **(50.8);**
    - the shaft **(50.5),** the end portions of which, protruding through the oblong holes **(50.13)** of the tube **(50.1, 50.1a)** and holes of both leaf springs **(50.2),** are secured by a pair of spacers **(50.14),** a pair of big washers **(50.12)** and a pair of retaining rings **(50.6);**
    - the shaft **(50.3),** the end portions of which, protruding through the oblong holes **(50.13)** of the tube **(50.1, 50.1a)** and the oblong holes **(50.2w)** of both leaf springs **(50.2),** are secured by a pair of retaining rings **(50.4);** and
    - a shaft **(50.9, 50.9a),** force-locking connected to the tube, to pivot the coupling casing **(51, 51a)** and to receive a pair of springs **(50.11),** biasing the shaft **(50.7, 50.7a);**

where the state of non-lock of the freewheeling device **(50, 50a to 50b)** is changed into a state of of lock by engaging the end portions of the first shaft **(50.7, 50.7a)** to the oblong holes **(50.2v)** of both leaf springs **(50.2)** when the coupling casing **(51, 51a to 51b),** being rotated up to angle ($\beta_1$) by the motor **(51.5),** activated in an accident, is decoupled from the distributor **(49, 49a to 49b).**

26. A rescue system according to at least one of claims 24 to 25, **characterised in that** the coupling casing **(51)** comprises

   - a pair of control plates **(51.2),** having control edges **(51.2x** to **51.2z),** the round retaining segments **(51.2u)** of which are form-locking retained on the tube **(50.1)** in the state of non-lock of the freewheeling device **(50, 50b);** and
   - a U-shaped holder **(51.1),** plug-in and force-locking connected to the control plates **(51.2)** by four rivets **(51.3).**

27. A rescue system according to at least one of claims 24 to 25, **characterised in that** the coupling casing **(51a)** comprises

   - a pair of control plates **(51.2a),** having control edges **(51.2x to 51.2z);** and
   - a U-shaped holder **(51.1a),** plug-in and force-locking connected to the control plates **(51.2a)** by a pair of countersunk rivets **(51.16a)** and a pair of round head rivets **(51.3a),** having retaining heads **(51.3au),** plug-in connected to holes of the tube **(50.1a)** in the state of non-lock of the freewheeling device **(50a).**

28. A rescue system according to claim 27, **characterised in that** the distributor **(49b)** is made of two round head rivets **(50.3b, 50.5b),** a pair of spacers **(50.6b),** the height differences $(h_1, h_2)$ of which are compensated by inserting two tools **(52, 53),** respectively, and of the remaining members of the distributor **(49, 49a),** when assembled the tools **(52, 53)** are removed.

29. A rescue system according to at least one of preceding claims, **characterised in that** the common wire **(2)** of the door-detachment device **(15)** of the vehicle door **(8)** is connected to a second bore of the hinge pin **(6)** of the lower hinge **(5)** and a first bore thereof is connected to a bore of the hinge pin $(6_o)$ of the upper hinge **(5)** by a wire $(2_o)$.

30. A rescue system according to at least one of claims 1 to 28, **characterised in that** the door-detachment device **(15i)** of the vehicle door $(8_i)$ is defined by

   - the hinges **(5i)**;
   - the wires **(2iu, 2io),** projected through the respective holes of the hinge pins **(6i),** to each of which a wire **(21i)** of the retaining pin **(25i)** and a wire **(20i)** of the supporting arm **(5.4i),** deflected by a deflecting pulley **(30),** are clamped by a bracket **(2.1i)**;
   - a twin-deflecting pulley **(32)** to deflect both wires **(2iu, 2io)** with a number of turns $(i_a)$ and $(i_b)$, which are merged into a wire **(2)** by a bracket **(2.3i)**; and
   - a deflecting pulley **(33)** to deflect the wire **(2)** with a number of turns $(i_c)$ to a common wire **(2).**

31. A rescue system according to claim 29 or 30, **characterised in that** the common wire **(2, 2S to 2Y)** of the door-detachment device **(15, 15a to 15j)** of the vehicle door **(8, 8S to 8Y),** which among all vehicle doors **(8, 8S to 8Y)** of the transport system shows the highest rate of being jammed in the accidents, is provided with sites of predetermined fracture.

32. A rescue system according to claim 1, **characterised in that** a gear **(G3)** is provided with a swinging arm **(73, 74),** rotatable about the $z_2$-axis, which comprises

   - a pipe **(73.1)**, to one end of which a threaded pin **(73.2)** is fastened and to the other end is
   - fastened an eye screw **(73.4),** where the reduction-ratio is adjusted by moving a wire ring **(86.6)** of a wire **(2n1, 2n4)** along the threaded pin **(73.2)** and a wire ring **(86.7)** of a wire **(86.2)** along an eye screw **(73.4);** and
   - two pairs of nuts **(73.5)** to secure both wire rings (86.6, **86.7).**

33. A rescue system according to claim 32, **characterised in that** an auxiliary wire **(86.2)** of the swinging arms **(73)** is fastened to a brake wire **(86.3)** of the hand-brake lever **(86)** by a bracket **(86.4),** where after the accident or in the event of the fire a dual operation of hand braking and door detachment is achieved by pulling up the hand-brake lever **(86).**

34. A rescue system according to claim 1, **characterised in that** serving as door-release levers release buttons **(91.1,91.1S)** or push buttons **(91.2, 91.2S)** of the buckle assemblies **(91, 91S)** are provided with release cables **(91.3)**, which are merged by a bracket **(91.4)** into a wire **(91.5),** which, deflected by a deflecting pulley **(44),** is wired to a switch **(91.6)** of a motor **(91.7)**.

35. A rescue system according to at least one of preceding claims, **characterised in that** the door-detachment device **(15, 15a to 15j)** of a rescue system **(55)** comprises

  - the gear **(G1, G2),** an entrance wire **(2n)** of which is defined by the wires **(2, 2S to 2Y)** of the door-detachment devices **(15, 15a to 15j)** of the vehicle doors **(8, 8S to 8Y)**, deflected via the respective pivots **(34, 34S, 33T, 34Y, 41, 35)** and jammed by the respective wire brackets, and an exit wire **(2n)** of which acts as the entrance wire of the freewheeling device **(50, 50a to 50b);** and
  - the freewheeling device **(50, 50a** to **50b),** the exit wires **(2n1 to 2n6)** of which are connected, via the respective pivots **(36 to 38, 40, 42 to 44),** swinging arm **(73, 74)** and belt pulley **(91.8),** driven by a motor **(91.7),** to the hand-brake lever **(86),** the release- or push buttons **(91.1, 91.1S** or **91.2, 91.2S),** the handle **(88D)** of the trunk cover **(8Y),** the handle **(88C),** arranged on the vehicle floor **(13)**, and the grips **(88A, 88B),** located in the tank-spaces **(77L, 77R),** covered by two tank caps **(87.2).**

36. A rescue system according to at least one of claims 1 to 34, **characterised in that** the door-detachment device **(15,15a to 15j)** of a rescue system **(55a)** comprises

  - the gear **(G1, G2),** an entrance wire **(2n)** of which is defined by the wires **(2, 2S to 2Y)** of the door-detachment devices **(15, 15a to 15j)** of the vehicle doors **(8, 8S to 8Y)**, deflected by the respective pivots **(34, 34S, 33T, 34Y, 41, 35)** and jammed by the respective wire brackets, and an exit wires **(2n1 to 2n6)** of which are connected, via the respective pivots **(36 to 38, 40, 42 to 44),** swinging arm **(73, 74)** and belt pulley **(91.8),** driven by motor **(91.7),** to the hand-brake lever **(86),** the release- or push buttons **(91.1, 91.1S** or **91.2, 91.2S),** the handle **(88D)** of the trunk cover **(8Y),** the handle **(88C),** arranged on the vehicle floor **(13)**, and the grips **(88A, 88B),** located in the tank-spaces **(77L, 77R),** covered by two tank caps **(87.2); and**
  - the latch device of the gear **(G1, G2).**

37. A rescue system according to at least one of claims 1 to 34, **characterised in that** a rescue system **(55c)** consists of a number of independent door-detachment devices **(15, 15a to 15j)** of the vehicle doors **(8, 8S to 8Y),** each of which comprises

  - the gear **(G1, G2),** provided with two exit wires **(2n6, 2n7)** and an entrance wire **(2n),** which is connected to the hinges **(5, 5a to 5j)** of the vehicle door **(8, 8S to 8Y)** via the respective pivots **(33, 33S);**
  - a belt pulley **(91.8),** driven by the motor **(91.7)** and connected to the exit wire **(2n6);** and
  - a door-release lever **(88E),** arranged adjacent to the vehicle door **(8, 8S to 8Y),** connected to the exit wire **(2n7)** and protected by a protective cover **(106)** from misuse.

38. A rescue system according to claim 37, **characterised in that** the protective cover **(106)** is opened by

  - an independent motor **(104),** activated by a sensor **(84D);** or
  - pulling a wire **(107);** or
  - using a tool **(108).**

39. A rescue system according to at least one of claims 35 to 38, **characterised in that** the rescue system **(55, 55a, 55c)** is equipped with a visible and/or audible warning system **(70, 70a to 70c).**

40. A rescue system according to claim 39, **characterised in that** the rescue system **(55, 55a, 55c)** is equipped with at least one sensor **(84A to 84H).**

41. A rescue system according to claim 40, **characterised in that** a 3-D sensor is provided for the rescue system **(55, 55a, 55c).**

42. A rescue system according to claim 40, **characterised in that** the sensor **(84D)** is provided for sensing the temperature of fire **(66),** broken in the transport system.

43. A rescue system according to at least one of claims 40 to 42, **characterised in that** in the event of an accident and/or of a fire a warning device **(78)** of the transport system is automatically switched on and warning lights **(4a**

**to 4d)** flash.

44. A rescue system according to claim 43, **characterised in that** warning lights **(4e to 4n)** of the warning device **(78)** are arranged adjacent to the hand-brake lever **(86)** and door-release levers **(88A to 88E).**

45. A rescue system according to at least one of claims 37 to 44, **characterised in that** the warning system **(70, 70a to 70c)** comprises

   - a navigator **(71, 71a, 71b);**
   - a radio **(83),** equipped with loudspeakers **(7a to 7n);**
   - a text data **(69);**
   - a cell phone **(72, 72a, 72b),** equipped with a loudspeaker; and/or
   - the warning device **(78)** with the warning lights **(4a to 4n).**

46. A rescue system according to claim **45, characterised in that** a battery **(89)** is connected to a main current circuit **(79.1),** whereto major current circuits **(79.11 to 79.14)** of the members **(71, 71a, 71b, 72, 72a, 72b, 78, 83)** of the warning system, current circuits **(79.1a to 79.1d, 79.1f to 79.1h)** of the sensors **(84A to 84H)** and a minor current circuit **(79.2)** are connected, where

   - to the minor current circuit **(79.2)** secondary current circuits **(79.21 to 79.26)** of the members **(71, 71a, 71b, 72, 72a, 72b, 78, 83)** ofthe warning system and the motor **(91.7)** are connected; and
   - in the event of the accident and/or the fire the members **(71, 71a, 71b, 72, 72a, 72b, 78, 83)** of the warning system and the motor **(91.7)** are supplied with current of the secondary current circuits **(79.21 to 79.26).**

47. A rescue system according to claim 45, **characterised in that** a battery **(89)** is connected to a main current circuit **(79.1),** whereto major current circuits **(79.11 to 79.14)** of the members **(71, 71a, 71b, 72, 72a, 72b, 78, 83)** ofthe warning system, current circuits **(79.1a** to **79.1d, 79.1f to 79.1h)** of the sensors **(84A** to **84H)** and a minor current circuit **(79.2)** are connected, where

   - to the minor current circuit **(79.2)** rechargeable batteries **(89a),** secondary current circuits **(79.21 to 79.26)** of the members **(71, 71a, 71b, 72, 72a, 72b, 78, 83)** of the warning system and the motor **(91.7)** are connected; and
   - in the event of the accident and/or the fire the power supply of the main current circuit **(79.1)** is cut off while the rechargeable batteries **(89a)** are in charge of the power supply therefor.

48. A rescue system according to claim **45, characterised in that** the text data **(69)** is stored in a storage medium **(76, 76.1, 76.2)** of the navigator **(71, 71a, 71b),** radio **(83)** or cell phone **(72a, 72b).**

49. A rescue system according to claim 48, **characterised in that** the text data **(69)** is compiled in several languages.

50. A rescue system according to at least one of claims 48 and 49, **characterised in that** in the event of an accident and/or a fire the text data **(69),** stored in the storage medium **(76.1)** of the radio **(83),** is played back via the loudspeakers **(7a to 7n).**

51. A rescue system according to at least one of claims 48 and 49, **characterised in that** in the event of an accident and/or a fire the text data **(69),** stored in the storage medium **(76, 76.2)** of the navigator **(71, 71a, 71b)** or cell phone **(72a, 72b),** is transmitted to the radio **(83)** and played back via the loudspeakers **(7a** to **7n)** thereof and/or the loudspeaker of the cell phone **(72a, 72b).**

52. A rescue system according to at least one of preceding claims, **characterised in that** the sensor **(84A to 84H),** sensing an accident or a fire, releases current to the motor **(91.7)** after the accident is over or the transport system comes to a halt and/or the transport system is on fire, where the motor **(91.7)** activates the door-detachment device **(15, 15a to 15j),** which detaches the vehicle doors **(8, 8S to 8Y)** thereof from the vehicle body **(10).**

**Revendications**

1. Système de sauvetage destiné à un moyen de transport dont les portes **(8, 8S-8Y)** sont coincées dans la carrosserie **(10)** par suite de l'énergie générée par le choc d'un accident ou dont les portes restent coincées à la suite d'un incendie **(66),** lesdites portes **(8, 8S-8Y)** étant reliées orientable et/ou coulissable à la carrosserie **(10)** par au moins deux charnières de porte **(5, 5a-5j),** chacune desdites charnières comprenant un couplet **(5.2, 5.2a-5.2j)** fixé à la porte du véhicule **(8, 8S-8Y),** ainsi qu'un deuxième couplet **(5.1, 5.1a-5.1j)** fixé à la carrosserie **(10)** et un boulon de charnière **(6, 6a-6j) ;**
**caractérisé en ce que :**

a) le boulon de charnière **(6, 6a-6c, 6g-6j)** est relié à un élément de traction **(2, $2_o$, 2a, 2b, 2h, 2iu, 2io, 2j, 2g)** ; et/ou :
b) le couplet **(5.1a-5.1f)** comprend au moins deux branches de charnière **(5.11a-5.11f; 5.12a-5.12f)** entre lesquelles est disposé un élément d'écartement **(3a-3f)** relié à un élément de traction **(20a, 20c, 2b-2f)** dont le mouvement est à l'origine de l'élargissement des deux branches de charnière **(5.11a-5.11f; 5.12a-5.12f) ;**
une fois l'accident terminé ou en cas d'incendie,
c) le boulon de charnière **(6, 6a-6c, 6g-6j)** est retiré du trou de la charnière **(5, 5a-5c, 5g-5j)** et/ou :
d) le couplet **(5.1a-5.1f)** se rompt, et ce :

en tirant sur l'élément de traction **(20a, 20c, 2, $2_o$, 2a-2f, 2h, 2iu, 2io, 2j, 2g),** de sorte que la porte correspondante **(8, 8S-8Y)** du véhicule est alors séparée de la carrosserie **(10).**

2. Système de sauvetage selon la revendication 1, **caractérisé en ce que** le boulon de charnière **(6, 6a-6c, 6h-6j)** ou l'élément d'écartement **(3a-3f)** est muni d'au moins un trou relié à l'élément de traction **(20a, 20c, 2, $2_o$, 2a-2f, 2h, 2iu, 2io, 2j)** qui est une corde.

3. Système de sauvetage selon la revendication 2, **caractérisé en ce que** la corde **(2a-2c, 2h, 2iu, 2io, 2j)** est enfichée dans un trou oblong du boulon de charnière **(6a-6c, 6h-6j),** une extrémité de ladite corde étant munie d'une bille **(2.2a-2.2c, 2.2h-2.2j)** d'un diamètre supérieur à celui du trou oblong.

4. Système de sauvetage selon la revendication 2 ou 3, **caractérisé en ce que** l'élément d'écartement **(3a-3f)** est prétendu par les deux branches de charnière **(5.11a-5.11f; 5.12a-5.12f)** du couplet, l'élargissement desdites branches étant assuré comme suit :

- par un mouvement de translation de la cheville d'écartement **(3a-3c)** dont la section finale **(3.2a-3.2c)** est conique ; ou :

- par un mouvement de rotation du disque d'écartement **(3d-3e)** dont l'épaisseur périphérique ($t_i$) augmente ; ou :

- par un mouvement de rotation du disque d'écartement **(3f)** dont le côté présente un angle d'inclinaison ($oe_o$).

5. Système de sauvetage selon la revendication 4, **caractérisé en ce que** l'élément d'écartement **(3b)** comprend une partie cylindrique **(3.1b),** une partie conique **(3.2b)** et une partie cylindrique **(3.4b)** à longueur ($L_m$) et que le boulon de charnière **(6b)** relié à la partie cylindrique **(3.1b)** au moyen de la corde **(2b)** présentant un jeu peut être déverrouillé sur un trajet ($L_n$) qui est < ($L_m$).

6. Système de sauvetage selon la revendication 4, **caractérisé en ce que** le mouvement de translation de l'élément d'écartement **(3a)** est limité par le contact de son anneau de butée **(3.3a)** à diamètre ($d_3$) avec une surface du couplet **(5.1a).**

7. Système de sauvetage selon la revendication 4, **caractérisé en ce que** des points (s) destinés à la rupture sont disposés sur au moins une surface frontale du couplet **(5.1a-5.1f).**

8. Système de sauvetage selon la revendication 1, **caractérisé en ce que** deux éléments **(6go, 6gu)** du boulon de charnière **(6g)** et une paire de tuyaux de guidage **(6.5o, 6.5u)** coulissables l'un à l'intérieur de l'autre et reliés à engagement positif sont fixés sur deux éléments d'accouplement **(6.1o, 6.1u)** dont la liaison est assurée comme suit :

- par une liaison à engagement positif entre les deux éléments du boulon **(6go, 6gu)** et un trou d'un flasque supérieur et inférieur **(5.1go, 5.1gu)** du couplet **(5.1g),** ainsi que par une liaison à engagement positif entre les deux tuyaux de guidage **(6.5o, 6.5u)** et un trou d'un flasque supérieur et inférieur **(5.1go, 5.1gu)** du couplet **(5.1g)** ; et :

- par une liaison basculable entre une paire de guidons supérieurs **(6.2o)** et une paire de guidons inférieurs **(6.2u)** à un patin de guidage **(6.4)** commun, ledit patin étant relié à la barre de traction **(2g)** à engagement positif et par adhérence, ladite barre étant coulissable à l'intérieur du couplet **(5.1g)** sur un trajet longitudinal limité par un anneau de butée **(2.1g)** ;

à la suite d'un mouvement de la barre de traction **(2g),** la paire de guidons supérieurs **(6.2o)** déplaçant l'élément d'accouplement supérieur **(6.1o)** vers le haut et la paire de guidons inférieurs **(6.2u)** déplaçant l'élément d'accouplement inférieur **(6.1u)** vers le bas, de sorte que l'autre couplet **(5.2g)** soit séparé des deux éléments du boulon **(6go, 6gu).**

9. Système de sauvetage selon la revendication 8, **caractérisé en ce que** les éléments d'accouplement identiques **(6.1o, 6.1u),** les éléments du boulon identiques **(6go, 6gu)** et les guidons identiques **(6.2o, 6.2u)** sont des composants de la charnière de porte **(5g)**.

10. Système de sauvetage selon au moins l'une des revendications 1 à 3, **caractérisé en ce qu'**une paire de bras d'appui **(5.4h)** est disposée sur le couplet **(5.1h)** de façon orientable autour de l'axe des rivets à tête goutte-de-suif **(5.5h)** dont les têtes s'enclenchent dans les trous de retenue **(5.31h)** d'un appui **(5.3h)** coulissable le long d'une paire de surfaces coulissantes **(5.6h)** du couplet **(5.1h)**, de sorte que les bras d'appui **(5.4h)** sont bloqués et reliés à engagement positif aux deux oeillets de l'autre couplet **(5.2h)**.

11. Système de sauvetage selon au moins l'une des revendications 1 à 3, **caractérisé en ce qu'**une paire d'oeillets du couplet **(5.2i, 5.2j)** est reliée à engagement positif à une paire de segments circulaires **(5.7i, 5.7j)** de l'autre couplet **(5.1i, 5.1j)** et à un bras d'appui **(5.4i, 5.4j)** coulissable dans ou sur le couplet **(5.1i, 5.1j),** ledit bras d'appui **(5.4i, 5.4j)** étant bloqué en enfichant une cheville d'arrêt **(25i, 25j)** avec une molette **(25.1i, 25.1j)** dans le couplet **(5.1i, 5.1j)** et le bras d'appui **(5.4i, 5.4j).**

12. Système de sauvetage selon au moins l'une des revendications ci-avant, **caractérisé en ce que** les deux branches de charnière **(5.11a-5.11f; 5.12a-5.12f)** sont reliées entre elles de façon lâche au moyen d'un élément de retenue **(1, 1d)** qui retient la porte du véhicule **(8, 8S-8Y)** lors de la séparation de celle-ci.

13. Système de sauvetage selon au moins l'une des revendications 4 et 12, **caractérisé en ce que** l'élément d'écartement **(3d-3f)** situé entre les deux branches de charnière **(5.11d-5.11f; 5.12d-5.12f)** est bloqué de la manière suivante :

- en enfichant une cheville de blocage **(3.1e, 3.2f)** dans la branche de charnière **(5.12e, 5.12f)** et en la vissant sur ladite branche ; ou :

- en enfichant la cheville de retenue **(1d)** dans la branche de charnière **(5.12d)** et en la vissant sur ladite branche à l'aide d'un écrou **(1.1d)**.

14. Système de sauvetage selon la revendication 13, **caractérisé en ce qu'**un dispositif de maintien de porte, incorporé dans un dispositif de séparation de porte, comprend les éléments suivants :

- un élément d'enclenchement **(1.2d)** dont le ressort de rappel **(1.3d)** est fixé au couplet **(5.2d)** au moyen de deux chevilles **(1.4d)** ; et :

- la cheville de retenue **(1d)** dont la partie donnant vers le bas **(1.6d)** s'enclenche dans un des évidements de l'élément d'enclenchement **(1.2d)** prétendu par le ressort de rappel **(1.3d)** si la porte est ouverte dans une position $(O_1)$, $(O_2)$ ou $(O_3)$.

15. Système de sauvetage selon au moins l'une des revendications 10, 11 et 14, **caractérisé en ce que** l'ouverture de la porte est limitée par le contact d'une paire de surfaces de contact **(Fb)** du couplet **(5.2d, 5.2h-5.2j)** avec les éléments suivants :

- deux goujons d'arrêt **(5.3d)** du couplet **(5.1d);** ou :

- deux surfaces de contact **(Fa)** des bras d'appui **(5.4h)** du couplet **(5.1h);** ou :

- une surface de contact **(Fa)** du bras d'appui **(5.4i, 5.4j)** du couplet **(5.1i, 5.1j).**

16. Système de sauvetage selon au moins l'une des revendications ci-avant, **caractérisé en ce que** le couplet **(5.1a-5.1f)** avec les deux branches de charnière **(5.11a-5.11f; 5.12a-5.12f)** est fabriqué en tant que profilé extrudé ou par coulée continue.

17. Système de sauvetage selon au moins l'une des revendications ci-avant, **caractérisé en ce que** les surfaces de l'élément d'écartement **(3a-3f)** ayant touché les branches de charnière **(5.11a-5.11f; 5.12a-5.12f)** sont revêtues d'un matériau **(3.5a-3.5f)** servant à l'insonorisation et/ou à la prétension.

18. Système de sauvetage selon la revendication 3, **caractérisé en ce qu'**un panier **(2.6)** comprend des points (s) destinés à la rupture et qu'il est enfiché dans le trou oblong du boulon de charnière **(6a-6j)** situé sur le front.

19. Système de sauvetage selon au moins l'une des revendications ci-avant, **caractérisé en ce qu'**un engrenage **(G1)** comprend une corde **(2n, 2n)** composée d'une corde entrante **(2n)** et d'une corde sortante **(2n),** ainsi qu'une poulie de renvoi **(9)** à rayon (r), ladite corde **(2n, 2n)** étant enroulée autour de ladite poulie avec un nombre de spires (i).

20. Système de sauvetage selon au moins l'une des revendications 1 à 18, **caractérisé en ce qu'**un engrenage **(G2)** comprend une corde entrante **(2n)**, une corde sortante **(2n)** et une poulie de renvoi **(9a),** ladite poulie comprenant les éléments suivants :

- une poulie de renvoi **(9.1a)** à rayon $(r_1)$, une boule d'arrêt **(2.4)** de la corde entrante **(2n)** étant enfichée dans le trou d'arrêt de ladite poulie ; ladite corde entrante **(2n)** étant ensuite enroulée autour de ladite poulie, avec un nombre de spires $(i_1)$ ; et :
- une poulie de renvoi **(9.2a)** à rayon $(r_2)$, une boule d'arrêt **(2.5)** de la corde sortante **(2n)** étant enfichée dans le trou d'arrêt de ladite poulie ; ladite corde sortante **(2n)** étant ensuite enroulée autour de ladite poulie, avec un nombre de spires $(i_2)$ ;

la relation entre les rayons étant comme suit : $(r_2) > (r_1)$.

21. Système de sauvetage selon la revendication 19 ou 20, **caractérisé en ce qu'**un mouvement de la corde en direction $(Z_t)$ est évité en serrant l'agrafe **(2.3a)** sur la corde entrante **(2n)** avant le trou d'un composant de carrosserie **(10.2)** et en serrant une agrafe **(2.3b)** sur la corde sortante **(2n)** avant le trou d'un composant de carrosserie **(10.3).**

22. Système de sauvetage selon au moins l'une des revendications 19 à 21, **caractérisé en ce qu'**un dispositif de blocage de l'engrenage **(G1, G2)** comprend un tuyau extérieur **(11.1)** et un arbre de blocage **(11)** coulissable longitudinalement dans ledit tuyau extérieur **(11.1)**, l'arbre de blocage **(11)** étant enfiché dans un trou d'arrêt situé sur un front de la poulie de renvoi **(9, 9.1a, 9.2a)** afin de bloquer l'ensemble ; pour la séparation, il suffit de l'enlever dudit trou d'arrêt.

23. Système de sauvetage selon au moins l'une des revendications ci-avant, **caractérisé en ce que** la corde **(2n, 2n, 2iu, 2io, 2d-2f, 2n1-2nn)**

- est revêtue d'un tuyau flexible **(9.8) ;** et/ou:

- est renvoyée par au moins une poulie de renvoi **(30-44).**

24. Système de sauvetage selon la revendication 1, **caractérisé en ce qu'**un dispositif à roue libre **(50, 50a-50b)** comprend les éléments suivants :

- un distributeur **(49, 49a-49b)** comprenant une corde entrante **(2n)** enroulée autour d'un arbre **(50.7, 50.7a)** et une corde sortante **(2nn)** enroulée autour de deux arbres **(50.3, 50.5; 50.3a, 50.5a)**, ladite corde ainsi que d'autres cordes sortantes **(2n1-2nm)** étant serrées les unes contre les autres par une agrafe **(2.9)** ; l'ensemble des cordes sortantes **(2n1-2nn)** étant reliées aux poignées de déverrouillage **(86, 88A-88D, 91.1, 91.2S)** d'un dispositif de séparation des portes **(15, 15a-15j)** du moyen de transport ;

- un boîtier de blocage **(51, 51a-51b);** si ledit boîtier est accouplé au distributeur **(49, 49a-49b),** cet accouplement permet au dispositif à roue libre **(50, 50a-50b)** de tourner librement ;
- une agrafe **(2.7, 2.8)** fixée sur la corde entrante **(2n)** enroulée autour de l'arbre **(50.7, 50.7a)** et destinée à éviter le mouvement de la corde en direction ($Z_t$) ; et :

- un moteur **(51.5).**

25. Système de sauvetage selon la revendication 24, **caractérisé en ce que** le distributeur **(49, 49a)** comprend les éléments suivants :

- une paire de ressorts à lames **(50.2)** dont les sections finales **(50.2u, 50.2x)** sont arrondies, chacune desdites sections présentant un trou et deux trous oblongs **(50.2v, 50.2w) ;**
- un tuyau **(50.1, 50.1a)** muni d'une paire de trous oblongs **(50.13)** le long desquels trois arbres **(50.3, 50.5, 50.7 ou 50.7a)** sont coulissables en sens longitudinal ;
- l'arbre **(50.7, 50.7a)** dont les sections finales dépassent les trous oblongs **(50.13)** du tuyau **(50.1, 50.1a)** et sont bloquées par deux circlips **(50.8) ;**
- l'arbre **(50.5)** dont les sections finales dépassent les trous oblongs **(50.13)** du tuyau **(50.1, 50.1a)** et les trous des deux ressorts à lames **(50.2)** et qui sont bloquées par une paire d'anneaux d'écartement **(50.14),** une paire de grandes rondelles **(50.12)** et une paire de circlips **(50.6)** ;
- l'arbre **(50.3)** dont les sections finales dépassent les trous oblongs **(50.13)** du tuyau **(50.1, 50.1a)** et les trous oblongs **(50.2w)** des deux ressorts à lames **(50.2)** et qui sont bloquées par une paire de circlips **(50.4) ;** et :

- un arbre **(50.9, 50.9a)** fixé au tuyau **(50.1, 50.1a)** et destiné à loger le boîtier de blocage de façon orientable **(51, 51a)** et à loger une paire de ressorts **(50.11)** qui assurent la prétension de l'arbre **(50.7, 50.7a) ;**

la modification de l'état du dispositif à roue libre **(50, 50a-50b),** c'est-à-dire son blocage, s'effectuée par l'enclenchement des sections finales de l'arbre **(50.7, 50.7a)** dans les trous oblongs **(50.2v)** des deux ressorts à lames **(50.2)** par suite du découplage du boîtier de blocage **(51, 51a-51b)** du distributeur **(49, 49a-49b)** lors d'une rotation du moteur **(51.5)** activé lors de l'accident, jusqu'à l'angle de rotation ($\beta_1$).

26. Système de sauvetage selon au moins l'une des revendications 24 et 25, **caractérisé en ce que** le boîtier de blocage **(51)** comprend les éléments suivants :

- une paire de plaques de commande **(51.2)** munies de bords de guidage **(51.2x-51.2z)** dont les segments d'arrêt circulaires **(51.2u)** sont maintenus par le tuyau **(50.1)** à engagement positif si le dispositif à roue libre est libéré **(50, 50b) ;** et :

- un arceau en U **(51.1)** relié aux plaques de commande **(51.2)** par quatre rivets **(51.3)** par enfichement et adhérence.

27. Système de sauvetage selon au moins l'une des revendications 24 et 25, **caractérisé en ce que** le boîtier de blocage **(51a)** comprend les éléments suivants :

- la paire de plaques de commande **(51.2a)** munies de bords de guidage **(51.2x-51.2z) ;** et :

- l'arceau en U **(51.1a)** enfiché dans les plaques de commande **(51.2a)** et relié à celles-ci par adhérence au moyen d'une paire de rivets à tête conique **(51.16a)** et une paire de rivets à tête goutte-de-suif **(51.3a)** dont les têtes de blocage **(51.3au)** sont enfichées dans les trous du tuyau **(50.1a)** si le dispositif à roue libre **(50a)** est libéré.

28. Système de sauvetage selon la revendication 27, **caractérisé en ce que** le distributeur **(49b)** est fabriqué de deux rivets à tête conique **(50.3b, 50.5b),** d'une paire d'anneaux d'écartement **(50.6b)** dont les différences de hauteur ($h_1$, $h_2$) sont compensées en enfichant deux outils **(52, 53),** et des parties restantes du distributeur **(49, 49a)** ; après la fabrication, lesdits outils **(52, 53)** sont retirés.

29. Système de sauvetage selon au moins l'une des revendications ci-avant, **caractérisé en ce que** la corde commune **(2)** du dispositif de séparation **(15)** de la porte **(8)** du véhicule est reliée au deuxième trou du boulon **(6)** de la charnière inférieure **(5)** de la porte dont le premier trou est relié au moyen de la corde **($2_o$)** à un trou du boulon **($6_o$)** de la charnière supérieure **(5)** de la porte.

30. Système de sauvetage selon au moins l'une des revendications 1 à 28, **caractérisé en ce que** le dispositif de séparation **(15i)** de la porte **($8_i$)** du véhicule comprend les éléments suivants :

    - les charnières de porte **(5i)** ;
    - les cordes **(2iu, 2io)** enfichées dans les trous oblongs des deux boulons de charnière **(6i)** ; chacun desdites cordes **(2iu, 2io),** ainsi qu'une corde **(21i)** de la cheville d'arrêt **(25i)** et une corde **(20i)** du bras d'appui **(5.4i)** renvoyée par une poulie de renvoi **(30),** étant regroupées au moyen de deux agrafes **(2.1i)** pour former la corde **(2iu, 2io)** ;
    - une double poulie de renvoi **(32)** renvoyant les deux cordes **(2iu, 2io)** avec un nombre de spires ($i_a$) et ($i_b$) pour former une corde **(2)** au moyen d'une agrafe **(2.3i)** ; et :

    - une poulie de renvoi **(33)** permettant de renvoyer la corde **(2)** avec un nombre de spires ($i_c$) pour former une corde commune **(2).**

31. Système de sauvetage selon la revendication 29 ou 30, **caractérisé en ce que** la corde commune **(2, 2S-2Y)** du dispositif de séparation **(15, 15a-15j)** de la porte (8, **8S-8Y)** du véhicule qui, dans les accidents, présente le taux de coincement le plus élevé parmi toutes les portes **(8, 8S-8Y)** du moyen de transport, est munie de points destinés à la rupture.

32. Système de sauvetage selon la revendication 1, **caractérisé en ce qu'**un engrenage **(G3)** est muni d'un guidon **(73, 74)** orientable autour de l'axe $z_2$, ledit guidon comprenant les éléments suivants :

    - un tuyau **(73.1),** une tige filetée **(73.2)** étant fixée sur la première extrémité dudit tuyau et sur la deuxième, un boulon à oeillet **(73.4),** le tout servant à déplacer un anneau **(86.6)** d'une corde **(2n1, 2n4)** le long de la tige filetée **(73.2)** et un anneau **(86.7)** d'une corde **(86.2)** le long du boulon à oeillet **(73.4)** afin de régler le rapport de multiplication/démultiplication ; et :

    - deux paires d'écrous **(73.5)** servant à bloquer les deux anneaux **(86.6, 86.7).**

33. Système de sauvetage selon la revendication 32, **caractérisé en ce qu'**une corde auxiliaire **(86.2)** du guidon **(73)** est fixée au câble de frein **(86.3)** d'un levier de frein à main **(86)** au moyen d'une agrafe **(86.4) ;** une fois l'accident terminé ou bien en cas d'incendie, l'activation du frein à main et le déverrouillage de la porte s'effectuent en tirant ledit levier de frein à main **(86).**

34. Système de sauvetage selon la revendication 1, **caractérisé en ce que** des touches de déverrouillage **(91.1, 91.1S)** ou des boutons-poussoirs **(91.2, 91.2S)** des boucles de ceinture **(91, 91S)** sont utilisés en tant que poignées de déverrouillage, lesdits éléments étant munis de câbles de déclenchement **(91.3)** dont les cordes **(91.10)** sont regroupées en une seule **(91.5)** au moyen d'une agrafe **(91.4),** ladite corde principale **(91.5)** étant renvoyée par une poulie de renvoi **(44)** et reliée au commutateur **(91.6)** d'un moteur **(91.7).**

35. Système de sauvetage selon au moins l'une des revendications ci-avant, **caractérisé en ce que** le dispositif de séparation de porte **(15, 15a-15j)** d'un système de sauvetage **(55)** comprend les éléments suivants :

    - l'engrenage **(G1, G2)** dont la corde entrante **(2n)** est constituée des cordes **(2, 2S-2Y)** renvoyées par les poulies de renvoi **(34, 34S, 33T, 34Y, 41, 35)** correspondantes et regroupées par les agrafes correspondantes, lesdites cordes faisant partie des dispositifs de déverrouillage **(15, 15a-15j)** des portes **(8, 8S-8Y)** du véhicule ; la corde sortante **(2n)** dudit engrenage étant utilisée en tant que corde entrante du dispositif à roue libre **(50, 50a-50b)** ; et :

    - le dispositif à roue libre **(50, 50a-50b)** dont les cordes sortantes **(2n1-2n6)** sont reliées au levier du frein à main **(86),** aux touches de déverrouillage ou aux boutons-poussoirs **(91.1, 91.1S ou 91.2, 91.2S),** à la poignée de déverrouillage **(88D)** du couvercle du coffre **(8Y),** à la poignée de déverrouillage **(88C)** placée sur le plancher du véhicule **(13)** et aux poignées de déverrouillage **(88A, 88B)** disposées dans des cavités latérales du véhicule **(77L, 77R)** et munies de deux bouchons de réservoir **(87.2),** le reliage étant assuré par les poulies de renvoi correspondantes **(36-38, 40, 42-44),** les guidons respectifs **(73, 74)** et une poulie de contrainte **(91.8)** entraînée par le moteur **(91.7).**

**36.** Système de sauvetage selon au moins l'une des revendications 1 à 34, **caractérisé en ce que** le dispositif de séparation de porte **(15, 15a-15j)** d'un système de sauvetage **(55a)** comprend les éléments suivants :

- l'engrenage **(G1, G2)** dont la corde entrante **(2n)** est constituée des cordes **(2, 2S-2Y)** renvoyées par les poulies de renvoi **(34, 34S, 33T, 34Y, 41, 35)** correspondantes et regroupées par les agrafes correspondantes, lesdites cordes faisant partie des dispositifs de déverrouillage **(15, 15a-15j)** des portes **(8, 8S-8Y)** du véhicule ; la corde sortante **(2n1-2n6)** dudit engrenage étant reliée au levier du frein à main **(86),** aux touches de déverrouillage ou aux boutons-poussoirs **(91.1, 91.1S** ou **91.2, 91.2S),** à la poignée de déverrouillage **(88D)** du couvercle de coffre **(8Y),** à la poignée de déverrouillage **(88C)** placée sur le plancher du véhicule **(13)** et aux poignées de déverrouillage **(88A, 88B)** disposées dans des cavités latérales du véhicule **(77L, 77R)** et munies de deux bouchons de réservoir **(87.2),** le reliage étant assuré par les poulies de renvoi correspondantes **(36-38, 40, 42-44),** les guidons respectifs **(73, 74)** et une poulie de contrainte **(91.8)** entraînée par le moteur **(91.7).**
- le dispositif de blocage de l'engrenage **(G1, G2).**

**37.** Système de sauvetage selon au moins l'une des revendications 1 à 34, **caractérisé en ce qu'**un système de sauvetage **(55c)** comprend plusieurs dispositifs de déverrouillage autonomes **(15, 15a-15j)** des portes **(8, 8S-8Y)** du véhicule, chacun desdits dispositifs comprenant les éléments suivants :

- l'engrenage **(G1, G2)** dont la corde entrante **(2n)** est reliée aux charnières **(5, 5a-5j)** de la porte **(8, 8S-8Y)** du véhicule, et ce à travers la poulie de renvoi **(33, 33S)** correspondante, ledit engrenage étant muni de deux cordes sortantes **(2n6, 2n7);**
- une poulie de contrainte **(91.8)** entraînée par le moteur **(91.7)** et reliée à la corde sortante **(2n6) ;** et :

- une poignée de déverrouillage **(88E)** située à côté de la porte **(8, 8S-8Y)** du véhicule et reliée à la corde sortante **(2n7),** ladite poignée étant couverte par un capot **(106)** afin de la protéger contre un usage abusif.

**38.** Système de sauvetage selon la revendication 37, **caractérisé en ce que** ledit capot de protection **(106)** s'ouvre comme suit :

- à l'aide d'un moteur **(104)** activé par un senseur **(84D);** ou :

- en tirant sur la corde **(107)** ; ou :

- à l'aide d'un outil **(108, 109)**.

**39.** Système de sauvetage selon au moins l'une des revendications 35 à 38, **caractérisé en ce que** le système de sauvetage **(55, 55a, 55c)** est équipé d'un système d'alerte visuel et/ou acoustique **(70, 70a, 70c).**

**40.** Système de sauvetage selon la revendication 39, **caractérisé en ce que** le système de sauvetage **(55, 55a, 55c)** est équipé d'au moins un senseur **(84A-84H).**

**41.** Système de sauvetage selon la revendication 40, **caractérisé en ce qu'**un senseur 3D est prévu pour ledit système de sauvetage **(55, 55a, 55c).**

**42.** Système de sauvetage selon la revendication 40, **caractérisé en ce que** le senseur **(84D)** destiné à la détection incendie **(66)** est disposé dans le moyen de transport même.

**43.** Système de sauvetage selon au moins l'une des revendications 40 à 42, **caractérisé en ce que** les feux de détresse **(78)** du moyen de transport sont mis en marche automatiquement en cas d'accident et/ou d'incendie et que des ampoules de détresse **(4a-4d)** se mettent alors à clignoter.

**44.** Système de sauvetage selon la revendication 43, **caractérisé en ce que** des ampoules de détresse **(4e-4n)** des feux de détresse **(78)** sont disposées à côté du levier du frein à main **(86)** et des poignées de déverrouillage **(88A-88E).**

**45.** Système de sauvetage selon au moins l'une des revendications 37 à 44, **caractérisé en ce que** le système d'alerte **(70, 70a-70c)** comprend les éléments suivants :

-   un navigateur **(71, 71a, 71b)** ;
-   une radio **(83)** avec hauts-parleurs **(7a-7n)** ;
-   un fichier texte **(69)** ;
-   un téléphone **(72, 72a, 72b)** avec un haut-parleur et/ou :

-   les feux de détresse **(78)**, y compris les ampoules **(4a-4n)**,

46. Système de sauvetage selon la revendication 45, **caractérisé en ce qu'**une batterie **(89)** alimente un circuit principal **(79.1)** sur lequel sont branchés des circuits primaires **(79.11-79.14)**, des éléments du système d'alerte **(71, 71a, 71b, 72, 72a, 72b, 78, 83)**, ainsi que les circuits **(79.1a-79.1d, 79.1f-79.1h)** des senseurs **(84A-84H)** et un circuit secondaire **(79.2)** ;

-   sur ledit circuit secondaire **(79.2)** sont branchés les circuits secondaires **(79.21-79.26)** des éléments du système d'alerte **(71, 71a, 71b, 72, 72a, 72b, 78, 83)** et du moteur **(91.7)** ; et :

-   en cas d'accident et/ou d'incendie, les éléments du système d'alerte **(71, 71a, 71b, 72, 72a, 72b, 78, 83)** et le moteur **(91.7)** sont alimentés par le circuit secondaire **(79.2)**.

47. Système de sauvetage selon la revendication 45, **caractérisé en ce qu'**une batterie **(89)** alimente un circuit principal **(79.1)** sur lequel sont branchés les circuits primaires **(79.11-79.14)** des éléments du système d'alerte **(71, 71a, 71b, 72, 72a, 72b, 78, 83)**, les circuits **(79.1a-79.1d, 79.1f-79.1h)** des senseurs **(84A-84H)** et un circuit secondaire **(79.2)** ;

-   sur ledit circuit secondaire **(79.2)** étant branchés des batteries rechargeables **89a,** les circuits secondaires **(79.21-79.26)** des éléments du système d'alarme **(71, 71a, 71b, 72, 72a, 72b, 78, 83)** et du moteur **(91.7)** ; et :

-   l'alimentation du circuit principal **(79.1)** étant interrompue en cas d'accident et/ou d'incendie, les batteries rechargeables **(89a)** assurant alors l'alimentation du moteur **(91.7)** et des éléments du système d'alarme **(71, 71a, 71b, 72, 72a, 72b, 78, 83).**

48. Système de sauvetage selon la revendication 45, **caractérisé en ce que** le fichier texte **(69)** est stocké dans un moyen de mémorisation **(76, 76.1-76.2)** du navigateur **(71, 71a, 71b),** de la radio **(83)** ou du téléphone **(72a, 72b)**.

49. Système de sauvetage selon la revendication 48, **caractérisé en ce que** le fichier texte **(69)** est rédigé dans plusieurs langues.

50. Système de sauvetage selon au moins l'une des revendications 48 à 49, **caractérisé en ce que** le fichier texte **(69)** stocké dans le moyen de mémorisation **(76.1)** de la radio **(83)** est édité par les hauts-parleurs **(7a-7n)** en cas d'accident et/ou d'incendie.

51. Système de sauvetage selon au moins l'une des revendications 48 à 49, **caractérisé en ce que** le fichier texte **(69)** stocké dans le moyen de mémorisation **(76, 76.2)** du navigateur **(71, 71a, 71b)** ou du téléphone **(72a, 72b)** est transmis à la radio **(83)** et édité par les hauts-parleurs **(7a-7n)** de ladite radio **(83)** et/ou les hauts-parleurs du téléphone **(72a, 72b)** en cas d'incendie et/ou d'accident.

52. Système de sauvetage selon au moins l'une des revendications ci-avant, **caractérisé en ce que** le senseur **(84A-84H)** qui enregistre l'accident et/ou l'incendie libère l'alimentation électrique du moteur **(91.7)** actionnant le dispositif de séparation des portes **(15, 15a-15j)** destiné à séparer les portes **(8, 8S-8Y)** du moyen de transport de la carrosserie **(10),** une fois l'accident, le trajet ou l'atterrissage et/ou en cas d'incendie.

Fig. 3

Fig. 5

Fig. 2

Fig. 4

Fig. 1

Fig. 7

Fig. 6

Fig. 8

Fig. 9

Fig. 12

Fig. 10

Fig. 11

Fig. 13

Fig. 14

Prior Art
Stand der Technik

Prior Art
Stand der Technik

Fig. 15

Fig. 16

Fig. 17

Fig. 18

39

EP 1 178 915 B1

Fig.23

Fig.21

Fig.22

Fig.19

Fig.20

40

Fig. 24

Fig. 25

Fig. 26

Fig. 27

Fig. 28

Fig. 29

Fig. 30

Fig. 31

Fig. 32

Fig.33

Fig.34

Fig.35

Fig. 36

Fig. 37